# EUROPÄISCHE PATENTSCHRIFT

(11) **EP 3 450 355 B1**
(45) Veröffentlichungstag und Bekanntmachung des Hinweises auf die Patenterteilung: **01.05.2024**
(21) Anmeldenummer: 18188927.0
(22) Anmeldetag: 14.08.2018
(51) Int. Cl.: B65G 17/06, B65G 17/24, B65G 47/64, B65G 47/96

(54) **FÖRDERANLAGE**
CONVEYING PLANT
INSTALLATION DE TRANSPORT

(30) Priorität: 28.08.2017 CH 10612017
(43) Veröffentlichungstag der Anmeldung: 06.03.2019
(73) Patentinhaber: WRH Walter Reist Holding AG, 8272 Ermatingen (CH)
(72) Erfinder: Bretz, Markus, 8704 Herrliberg (CH)
(74) Vertreter: Frei Patent Attorneys

(56) Entgegenhaltungen:
- WO-A1-2017/085203
- CH-A1- 710 608
- US-A- 5 353 912

## Beschreibung

Die Erfindung liegt auf dem Gebiet der Fördertechnik und betrifft eine Förderanlage gemäss dem Oberbegriff des Anspruchs 1 sowie ein Fördersystem, enthaltend die Förderanlage und ein Verfahren zum Betreiben der Förderanlage.

Durch den zunehmenden Online-Handel werden in Umschlagzentren immer grössere Mengen von Fördergütern, meist in Form von Paketen, verarbeitet. Die grossen Mengen an Fördergütern sind eine grosse Herausforderung für die Umschlagzentren. So sollen die Fördergüter in den Umschlagzentren möglichst speditiv verarbeitet werden, damit diese ihren Empfänger schnellstmöglich erreichen.

In den Umschlagzentren werden die eintreffenden Fördergüter in Sortier- und Verteilsysteme eingespiesen. In einem der ersten Schritte werden die am Fördergut angeordneten Identifikationsinformationen erfasst, welche erlauben, das Fördergut einer Zustellörtlichkeit zuzuordnen.

Diese Zustellörtlichkeit kann z. B. ein Land, eine Region, ein Bezirk, eine Ortschaft, eine Strasse oder eine vollständige Empfängeradresse sein.

Eine der Hauptaufgaben der Umschlagzentren ist es, die Fördergüter mittels so genannten Sortern nach Zustellörtlichkeiten zu sortieren und in Gruppen zusammenzufassen, welche den Zustellörtlichkeiten entsprechen.

So sind beispielsweise so genannte Kippschalensorter bekannt, welche ein Fördersystem zur Beförderung und Sortieren von Fördergütern mittels kippbaren Förderschalen bilden. Beim Kippschalensorter werden die Fördergütern in Kippschalen an Abgabestellen vorbei gefördert. Sobald das Fördergut die richtige Abgabestelle erreicht hat, wird die Kippschale über einen Kippmechanismus in eine Schrägstellung versetzt und die Fördergüter gleiten seitlich über die Förderschale zu einer Übernahmeeinrichtung hin ab.

Die Kippschalen sind auf einem Fahrwerk angeordnet. Das Fahrwerk kann aus miteinander verketten Förderelementen bestehen und kann über Gleitelemente oder Laufrollen entlang einer Unterlage, insbesondere einer Führungsschiene, gleitend oder rollend geführt sein.

Ein solcher Kippschalensorter wird beispielsweise in der Veröffentlichungsschrift US 5,632,589 beschrieben.

Die Veröffentlichungsschriften WO 2017/076541 A1 und WO 2013/075714 A1 beschreiben jeweils einen Sortiermechanismus mit kippbaren Förderstreckensegmenten zum Sortieren von Paketen oder Gepäckstücken.

Die Publikationsschrift EP 1 719 721 B1 beschreibt eine Sortiervorrichtung mit einer Neigevorrichtung zum Kippen des Förderorgans mit Förderbehälter zwecks Abgabe von Produkten aus den Förderbehältern.

Die Publikationsschrift CH 710 608 A1 beschreibt ein Förderorgan für einen Förderer mit einem Förderelement, welches eine Hauptfläche ausbildet. Das Förderorgan umfasst Rollenmechanismen mit jeweils einer Rollenhalterung und einer Rolle mit Rollenachse. Die Rollenhalterung wirkt mit einem Stellmittel zusammen, so dass die Rollenachse der Rolle relativ zur Hauptfläche des Förderelements wenigstens zwischen einer ersten Position und einer zweiten Position beweglich ist. Die Rolle ragt in der ersten und in der zweiten Position der Rollenachse mindestens teilweise über die Hauptfläche des Förderelements hinaus. Die Rolle ist imstande, in der ersten Position der Rollenachse eine Arretierstellung und in der zweiten Position der Rollenachse eine Freilaufstellung einzunehmen, wobei die Rolle in der Arretierstellung bezüglich einer Drehung relativ zur Hauptfläche arretiert ist, und die Rolle in der Freilaufstellung frei drehend ist. Die CH 710 608 A1 offenbart eine Förderanlage gemäß dem Oberbegriff des Anspruchs 1.

Obwohl der Automatisierungsgrad in solchen Umschlagzentren gross ist, sind gewisse Arbeitsschritte immer noch manuell auszuführen.

Dies ist beispielsweise bei Fördergütern der Fall, welche aufgrund besonderer Eigenschaften, wie z. B. ihrer Geometrie, Gestalt oder Struktur nicht in einen herkömmlichen, vollautomatisierten Verarbeitungsprozess eingeschleust werden können.

Diese besonderen Fördergüter müssen vielmehr separat verarbeitet und einem Sorter zugefördert werden. Die Zuführung der Fördergüter in den Verarbeitungsprozess erfolgt in der Regel manuell aus Transportbehältern bzw. Bereitstellungsbehältern.

Bevor diese Fördergüter allerdings einem Sorter zugefördert werden können, müssen von diesen über eine Erfassungseinrichtung Identifikationsinformationen ermittelt werden, welche die Bestimmung der für die Sortierung notwendigen Zustellörtlichkeit erlauben.

So erfolgt die Erfassung der Identifikationsinformationen beispielsweise in einer als Bereitstellungsförderer ausgelegten Förderanlage, welcher die Fördergüter manuell zugeführt werden.

Da die Fördergüter unförmig, z. B. rundlich, sein können (Wegkippen oder Abrollen von der Förderbahn) sowie Verpackungsschnüre (Verwicklungsgefahr mit dem Förderorgan) und offen liegende Klebeflächen von Klebebändern (Festkleben am Förderorgan) aufweisen können, werden diese in der Förderanlage insbesondere in Förderschalen gefördert. Die Förderschalen schirmen die Fördergüter vom Förderorgan ab und geben diesen zudem umfassenden seitlichen Halt.

Die Fördergüter werden nach erfolgreicher Identifikation zwecks Übergabe an eine Übernahmevorrichtung in einen Abgabereich der Förderanlage gefördert.

Es nun eine Aufgabe der vorliegenden Erfindung eine Förderanlage vorzuschlagen, welche die Ausführung von Arbeitsschritten am Fördergut, wie Erfassen von Identifikationsinformationen, erlaubt, und welche dazu ausgelegt ist, die Fördergüter an eine Übernahmevorrichtung zu übergeben.

Gemäss einer Weiteren Aufgabe soll es die Förderanlage ermöglichen, die Fördergüter mit der Fördergeschwindigkeit eines sich entlang einer Förderstrecke erstrechenden Förderorgans zu fördern und in definierten Förderstreckenabschnitten in einer gegenüber der Fördergeschwindigkeit des mit bewegten Förderorgans abweichenden Geschwindigkeit zu fördern oder sogar anzuhalten.

Wenigstens eine der Aufgaben wird durch die Merkmale der unabhängigen Ansprüche 1, 10 und 13 gelöst. Die abhängigen Ansprüche sowie die Beschreibung und die Figuren beinhalten besondere Ausführungsformen und Weiterbildungen der Erfindung.

Die Förderanlage umfasst ein Förderorgan, welches entlang einer Förderstrecke zur Förderung von Fördergüter antreibbar ist.

Das Förderorgan ist während des Förderbetriebes insbesondere kontinuierlich angetrieben.

Das Förderorgan ist insbesondere umlaufend geführt, so dass die Förderanlage eine geschlossene Förderstrecke ausbildet.

Das Förderorgan bildet eine dem Fördergut zugewandte, die Förderstrecke definierende, bahnförmige Hauptfläche aus.

Die Hauptfläche definiert insbesondere eine Trennfläche zwischen den oberhalb geförderten Förderbehältern und den unterhalb angeordneten Anlageteilen, wie Rollenhalterungen, Untergestell, Führungskanal oder Antriebskörper.

Die Hauptfläche verhindert beispielsweise, dass Gegenstände durch Zwischenräume zwischen den Rollen hindurch fallen können. Die Hauptfläche dient auch der Betriebssicherheit, da keine oder nur kleine Lücken zwischen den Förderelementen bestehen und ein Risiko eines Verkantens, Hängenbleibens oder Mitreissens gering ist.

Ferner umfasst das Förderorgan mindestens ein Förderelement. Das mindestens eine Förderelement ist insbesondere flächig bzw. als Flächenelement ausgebildet. Die Hauptfläche wird insbesondere aus einer dem Fördergut zugewandten Oberfläche des mindestens einen Förderelementes ausgebildet.

Das Förderorgan umfasst insbesondere mehrere entlang der Förderstrecke angeordnete Förderelemente, welche insbesondere die bahnförmige Hauptfläche ausbilden. Die Förderelemente können einander in Förderrichtung überlappen.

Das Förderorgan umfasst im Weiteren Rollen, welche über Rollenhalterungen an dem mindestens einen Förderelement angeordnet und um Rollenachsen drehbar gelagert sind.

Die Rollen können über die Rollenhalterungen wahlweise den Zustand einer Arretierstellung oder einer Antriebsstellung einnehmen.

Die Rollen können über die Rollenhalterungen wahlweise den Zustand einer Freilauflaufstellung, einer Arretierstellung oder einer Antriebsstellung einnehmen.

Die Förderanlage umfasst nun mindestens einen auf dem Förderorgan verbindungsfrei aufliegenden Förderbehälter zur Aufnahme eines Fördergutes.

Der Förderbehälter bildet insbesondere eine Vertiefung, z. B. eine konkave Vertiefung, zur Aufnahme des Fördergutes aus. Der Förderbehälter ist insbesondere gegen oben offen. Der Förderbehälter kann eine Förderkiste, ein Fördertablet oder insbesondere eine Förderschale sein.

Die Rollen des Förderorgans ragen mindestens teilweise über die Hauptfläche des Förderelementes hinaus, so dass der mindestens eine Förderbehälter den Rollen bzw. dessen Laufflächen aufliegt. Die Rollen ragen insbesondere durch Ausnehmungen im Förderelement hindurch. Der Förderbehälter kann teilweise oder insbesondere vollständig den Rollen aufliegen.

Die Rollenhalterungen und die Rollen sind jeweils Teil eines Rollenmechanismus. Die verschiedenen Zustände der Rollen werden nun insbesondere durch Wirkelemente hervorgerufen werden, welche auf den Rollenmechanismus einwirken.

Die Rollen sind hierbei insbesondere um jeweils eine physische Rollenachse drehbar in der Rollenhalterung gelagert.

Wirkelemente bezüglich Freilaufstellung können Stellmittel sein, welche die Rollen während der Bewegung des Förderorgans in einer Freilaufstellung bewegen bzw. in dieser halten. Die Stellmittel sind insbesondere unterhalb der Hauptfläche bzw. unterhalb des mindestens einen Förderelementes angeordnet. Die Stellmittel wirken insbesondere von unten auf den Rollenmechanismus ein.

Die Stellmittel sind insbesondere ortsfest, d.h. stationär in der Förderanlage angeordnet. Das heisst, die Stellmittel bewegen sich nicht mit dem Förderorgan entlang der Förderstrecke.

Die Stellmittel sind insbesondere Kulissenführungen, entlang welchen das Förderorgan mit den Rollenmechanismen bewegt wird. Die Stellmittel können auch zu- und wegschaltbare Kulissen sein, so dass die Rollen entlang einer bestimmten Förderstrecke wahlweise in eine Freilaufstellung gebracht werden können.

Die Stellmittel können beispielsweise direkt oder indirekt auf die physischen Rollenachsen einwirken und so die Rollen in eine Freilaufstellung bringen bzw. in dieser halten. So können die Stellmittel durch eine direkte oder indirekte Krafteinwirkung auf die physischen Rollenachsen eine Verschiebung der Rollen in eine Freilaufstellung bewirken. "Indirekt" bedeutet, dass die Stellmittel z. B. auch auf eine Achshalterung einwirken können, in welchen die physischen Rollenachsen gehalten werden.

Die genannten Stellmittel kommen insbesondere entlang von Staustrecken zum Einsatz.

Wirkelemente bezüglich Antriebsstellung können Abrollführungen sein, welche die Rollen während der Bewegung des Förderorgans entlang der Förderstrecke antreiben.

Die Abrollführung bzw. deren Abrollfläche ist insbesondere unterhalb der Hauptfläche bzw. unterhalb des mindestens einen Förderelementes angeordnet. Die Abrollfläche verläuft insbesondere parallel zur Hauptfläche des Förderorgans.

Die Abrollführungen bilden insbesondere eine Abrollfläche aus, welche den Laufflächen der Rollen von unten anliegt. Die Abrollführung ist insbesondere ortsfest, d.h. stationär in der Förderanlage angeordnet. D.h. die Abrollführung wird nicht mit dem Förderorgan entlang der Förderstrecke mitbewegt. Die Abrollführung kann zu- und wegschaltbar sein, so dass die Rollen entlang einer bestimmten Förderstrecke wahlweise angetrieben sein können.

Die Rollen rollen in der Antriebsstellung durch die Förderbewegung des Förderorgans entlang der Förderstrecke in Förderrichtung entlang der Abrollfläche der Abrollführung ab und werden so durch die Abrollführung passiv angetrieben.

Da die Rollen mit der Geschwindigkeit des Förderorgans an der Abrollführung abrollen und die tangentiale Bewegungsrichtung der Laufflächen an der Auflagestelle der Förderbehälter in Förderrichtung gerichtet ist, werden die auf den passiv angetriebenen Rollen aufliegenden Förderbehälter mit der doppelten Geschwindigkeit des Förderorgans in Förderrichtung bewegt.

Die Abrollfläche verläuft insbesondere unterhalb der Hauptfläche bzw. des mindestens einen Förderelementes parallel zur Hauptfläche des Förderorgans.

Gemäss einer Weiterbildung der Abrollführung weist diese anstelle einer stationären Abrollfläche ein angetriebenes Abrollelement mit einer entsprechend bewegten Abrollfläche auf, wie z. B. ein umlaufend angetriebener Antriebsriemen oder Antriebsband. Die Abrollfläche des Abrollelements kann entgegen der Förderrichtung angetrieben werden. Die Abrollfläche des Abrollelements kann auch in Förderrichtung angetrieben werden.

Die dem angetriebenen Abrollelement anliegenden Rollen können nun durch das angetriebene Abrollelement zusätzlich im oder entgegen dem Uhrzeigersinn angetrieben werden. Dadurch lassen sich die Förderbehälter in einer beliebigen Geschwindigkeit unabhängig von der Geschwindigkeit des Förderorgans antreiben.

Wird beispielsweise die Abrollfläche des Abrollelements entgegen der Förderrichtung angetrieben, so bewirkt dies eine zusätzliche Beschleunigung des Förderbehälters in Förderrichtung.

Wird beispielsweise die Abrollfläche des Abrollelements in Förderrichtung angetrieben, so bewirkt dies eine Verlangsamung des Förderbehälters in Förderrichtung gegenüber einem passiven Antrieb durch die Abrollführung. Bei entsprechend hoher Geschwindigkeit des Abrollelementes kann der Förderbehälter sogar langsamer als die Fördergeschwindigkeit oder entgegen der Fördergeschwindigkeit des Förderorgans gefördert werden.

Das heisst die Beschleunigung des Förderbehälters kann entlang einer Beschleunigungsstrecke gegenüber dem Förderorgan auch negativ sein.

Das Abrollelement wird insbesondere mittels eines über die Steuerungseinrichtung gesteuerten Antriebs angetrieben.

Die genannten Abrollführungen kommen insbesondere entlang von Beschleunigungsstrecken zum Einsatz.

Wirkelemente bezüglich Arretierstellung können die Rollen selbst sein, welche sich mit ihrem Eigengewicht, d.h. mittels Schwerkraft, selbst in die Arretierstellung bringen bzw. in dieser verbleiben.

Die Wirkelemente können auch die Förderbehälter und/oder das Fördergut sein, welche mit ihrem Auflagegewicht die Rollen in eine Arretierstellung bringen bzw. in dieser halten.

Die Rollenhalterung kann hierzu ein Arretierelement enthalten, welchem die Rollen durch ihr Eigengewicht und/oder durch das Auflagegewicht des Förderbehälters und/oder des Fördergutes anliegen.

Das Arretierelement und die Rolle bilden dabei einen Reibkontakt aus, welcher ein freies Drehen der Rollen verhindert. Der Reibkontakt blockiert also die Drehung der Rollen. Die Rollen können insbesondere mit ihren Laufflächen dem Arretierelement anliegen.

Entsprechend werden die Förderbehälter in der Arretierstellung der Rollen mit der Fördergeschwindigkeit des Förderorgans gefördert. Die Rollen wirken dabei auf die Förderbehälter als Mitnehmer.

Die Laufflächen der Rollen weisen hierzu insbesondere einen hohen Reibungskoeffizienten auf. Dieser sorgt für eine hohe Haft- und Gleitreibung mit den diesen aufliegenden Förderbehältern bzw. mit dem Arretierelement. Die Rollen können z. B. eine Lauffläche aufweisen, welche gummiert ausgebildet ist.

Die Arretierstellung kommt insbesondere entlang einer Beschickungsstrecke oder allgemein bei einem ausschliesslichen Förderbetrieb zum Einsatz.

Gemäss einer Weiterbildung der Erfindung sind die Rollen derart in der Rollenhalterung gelagert, dass diese permanent mindestens teilweise über die Hauptfläche des Förderelementes hinausragen. Permanent bedeutet über die gesamte Förderstrecke hinweg und in allen drei oben genannten Zuständen. Das heisst, der Rollenmechanismus sieht keine Rollenstellung vor, in welcher die Laufflächen der Rollen vollständig unterhalb der Hauptfläche angeordnet sind.

Die Rollen sind mittels Wirkelementen, wie oben beschrieben, jeweils insbesondere zwischen mindestens zwei räumlich unterschiedlichen Positionen bewegbar. In diesen Positionen nehmen die Rollen unterschiedliche Zustände aus der Gruppe der Zustände, umfassend die Arretierstellung, Freilaufstellung und Antriebsstellung, ein.

Die Bewegung zwischen den mindestens zwei räumlich unterschiedlichen Positionen enthält insbesondere eine Bewegungskomponente quer zur Hauptfläche.

Gemäss einer Weiterbildung der Erfindung sind die Rollen mittels den Wirkelementen jeweils senkrecht zur Hauptfläche zwischen mindestens zwei Positionen bewegbar.

Entsprechend ragen die Rollen zwischen den mindestens zwei Positionen um ein unterschiedliches Mass über die Hauptfläche hinaus.

Gemäss einer Weiterbildung des Rollenmechanismus kann die mindestens eine erste räumliche Position der Arretierstellung entsprechen.

Gemäss einer Weiterbildung des Rollenmechanismus kann die mindestens zweite räumliche Position der Freilaufstellung entsprechen.

Gemäss einer Weiterbildung des Rollenmechanismus kann die mindestens zweite räumliche Position der Antriebsstellung entsprechen.

Gemäss einer Weiterbildung des Rollenmechanismus kann die mindestens zweite räumliche Position sowohl der Freilaufstellung als auch der Antriebsstellung entsprechen.

Das Förderelement kann beispielsweise ein plattenförmiges Element bzw. ein Plattenelement sein. Das Förderorgan kann entlang der Förderstrecke mehrere, insbesondere einander überlappende Plattenelemente, enthalten und Teil eines Plattenförderers ein.

Die Plattenelemente können insbesondere an einem sich entlang der Förderstrecke erstreckenden Antriebskörper, z. B. an einem Zugkörper, befestigt sein. Der Antriebskörper und über diesen die Plattenelemente werden über eine Antriebseinrichtung entlang der Förderrichtung angetrieben.

Der Antriebskörper kann ein Gelenkkörper, wie z. B. eine Antriebskette sein. Der Antriebskörper kann entlang einer Führungsschiene, insbesondere in einem Führungskanal einer Führungsschiene, insbesondere rollend oder gleitend geführt sein. Der Antriebskörper kann entsprechend Laufrollen oder Gleitelemente umfassen.

Das Förderelement kann auch ein Modul einer Modulbandkette bzw. Mattenkette sein, wobei die Hauptfläche durch die Modulbandkette bzw. Mattenkette ausgebildet wird. Die Förderelemente sind entsprechend miteinander verbunden, insbesondere verkettet.

Grundsätzlich kann das Förderelement auch ein durchgehendes Förderband mit Durchgangsöffnungen für die Rollen sein.

Die Förderanlage mit dem oben beschriebenen Förderorgan bildet insbesondere eine Beschickungsstrecke aus, entlang welcher die Förderbehälter mit Stückgütern beschickt, insbesondere manuell beschickt werden. Entlang der Beschickungsstrecke ist insbesondere eine entsprechende Beschickungseinrichtung angeordnet.

Die Beschickungseinrichtung kann durch eine oder mehrere entlang der Beschickungsstrecke angeordnete Beschickungsstationen ausgebildet werden. In den Beschickungsstationen werden die Förderbehälter z. B. aus Speicherbehältern manuell mit Fördergütern beschickt.

Die Förderbehälter werden entlang der Beschickungsstrecke insbesondere mit der Geschwindigkeit des Förderorgans bewegt. Das heisst, die Rollen des Förderorgans befinden sich in einer Arretierstellung und wirken als Mitnehmer.

Die Rollen nehmen die Arretierstellung, wie oben bereits erwähnt, aufgrund des Eigengewichts der Rollen oder des Auflagedrucks der Förderbehälter bzw. der darin mitgeführten Fördergüter ein.

Die Rollenhalterungen und die Rollen zusammen mit den Wirkelementen können einen Bewegungsmechanismus bilden, mit welchem der mindestens eine Förderbehälter relativ zum Förderorgan bewegbar ist. Diese Wirkelemente können Wirkelemente bezüglich Freilaufstellung und/oder Wirkelemente bezüglich Antriebsstellung und/oder Wirkelemente bezüglich Arretierstellung sein.

Nach der Beschickungsstrecke kann in Förderrichtung F betrachtet eine Erfassungseinrichtung angeordnet sein, welche am Fördergut angebrachte Identifikationsinformationen erfasst. Die Identifikationsinformationen erlauben beispielsweise die Bestimmung einer Zustellörtlichkeit, wie Adresse, des Fördergutes.

Die Erfassungseinrichtung kann eine optische Erfassungseinrichtung, wie z. B. ein Mehrseitenscanner sein, welcher das Fördergut von mehreren Seiten nach Identifikationsinformationen absucht.

Ebenfalls nach der Beschickungsstrecke und insbesondere nach der Erfassungseinrichtung kann in Förderrichtung betrachtet eine Wägeeinrichtung angeordnet sein, mittels welcher das Gewicht des Fördergutes ermittelt werden kann. Die Wägeeinrichtung kann auch vor der Erfassungseinrichtung angeordnet sein.

Im Weiteren kann nach der Beschickungsstrecke und insbesondere nach einer Erfassungseinrichtung und/oder Wägeeinrichtung in Förderrichtung betrachtet eine Wendelstrecke folgen, entlang welcher die Förderbehälter durch das Förderorgan auf ein höheres Förderniveau gefördert werden.

Die Wendelstrecke dient unter anderem der Zeitüberbrückung bis die Steuerungseinrichtung der Förderanlage aus den an der Erfassungseinrichtung ermittelten Identifikationsinformationen eine Zustellörtlichkeit ermittelt hat bzw. festgestellt hat, dass zu einem Fördergut keine Zustellörtlichkeit ermittelt werden kann.

Es soll nämlich insbesondere vorgesehen sein, dass die Fördergüter erst dann in einen Abgabebereich gefördert werden, wenn die Verarbeitung der Identifikationsinformationen durch die Steuerungseinrichtung abgeschlossen ist.

Die Rollen des Förderorgans sind entlang der Wendelstrecke insbesondere in einer Arretierstellung und wirken so als Mitnehmer.

Die Förderanlage bildet mindestens eine Staustrecke zum Puffern von Förderbehältern aus.

Die Staustrecke wird vor einem weiter unten noch beschriebenen Abgabebereich ausgebildet.

Die Staustrecke wird insbesondere zwischen einer Beschickungsstrecke und einem Abgabebereich ausgebildet.

Die Staustrecke ist insbesondere in Förderrichtung betrachtet nach der oben genannten Wendelstrecke bzw. der Erfassungs- und Wägeeinrichtung angeordnet.

Die Rollen befinden sich entlang der Staustrecke in einer Freilaufstellung. Auf diese Weise kann sich das Förderorgan unterhalb der stehenden oder mit geringerer Geschwindigkeit als das Förderorgan bewegten Förderbehälter hinweg bewegen, ohne dass Gleitreibung zwischen dem Förderorgan und den Förderbehältern auftritt.

Entsprechend können entlang der Staustrecke, wie oben bereits beschrieben, Stellmittel angeordnet sein, mittels welchen die Rollen, z. B. aus einer Arretierstellung, in eine Freilaufstellung bewegbar bzw. in dieser haltbar sind.

Das Förderorgan bewegt sich also unterhalb der Förderbehälter durch die Staustrecke.

Die Förderanlage enthält in Förderrichtung betrachtet nach der Staustrecke eine Entlassungseinrichtung zum Entlassen einzelner Förderbehälter aus der Staustrecke.

Die Entlassung der Förderbehälter erfolgt insbesondere zu einem Abgabebereich der Förderanlage hin. Die Entlassung wird beispielsweise über die Steuerungseinrichtung der Förderanlage gesteuert.

Die Förderanlage enthält eine Beschleunigungsstrecke.

Die Beschleunigungsstrecke ist in Förderrichtung betrachtet nach, insbesondere unmittelbar nach der Staustrecke bzw. der Entlassungseinrichtung angeordnet.

Die Beschleunigungsstrecke ist in Förderrichtung betrachtet vor, insbesondere unmittelbar vor dem Abgabebereich angeordnet. Die Beschleunigungsstrecke dient insbesondere dem Positionieren der Förderbehälter entlang der Beschleunigungsstrecke vor dem Abgabebereich.

Die Förderbehälter werden entlang der Beschleunigungsstrecke über die sich in Antriebsstellung befindlichen Rollen des Förderorgans gegenüber dem Förderorgan beschleunigt.

Die Beschleunigung kann eine positive oder negative Beschleunigung sein. Das heisst die Förderbehälter können entlang der Beschleunigungsstrecke gegenüber dem Förderorgan (positiv) beschleunigt oder verzögert werden.

Die Förderbehälter weisen entlang der Beschleunigungsstrecke zumindest abschnittsweise insbesondere eine andere, insbesondere höhere Fördergeschwindigkeit, insbesondere die doppelte Fördergeschwindigkeit auf als das Förderorgan.

Gemäss einer besonderen Ausführungsform können die Förderbehälter entlang der Beschleunigungsstrecke mit einer vom Förderorgan unabhängigen, variablen Geschwindigkeit gefördert werden.

Die Rollen des Förderorgans werden entlang der Beschleunigungsstrecke über eine Abrollführung entsprechend passiv oder aktiv angetrieben.

Die Abrollführung kann zum aktiven Antreiben der Rollen entlang der Beschleunigungsstrecke ein über einen Antrieb aktiv antreibbares Abrollelement enthalten, auf welchem die Rollen abrollen.

Die Antriebsfläche des Abrollelements kann entgegen und gegebenenfalls auch in Förderrichtung angetrieben sein. Das Abrollelement, welches insbesondere mittels eines Antriebs über die Steuerungseinrichtung variabel antreibbar ist, wurde bereits weiter oben beschrieben.

Die Rollen werden also entlang der Beschleunigungsstrecke durch die Abrollführung in die Antriebsstellung bewegt bzw. in dieser gehalten. Die Antriebsstellung kann z. B. aus einer Arretierstellung oder einer Freilaufstellung eingenommen werden.

Das Förderorgan bewegt sich also unterhalb der Förderbehälter ebenfalls durch die Beschleunigungsstrecke.

Wie bereits erwähnt, bildet die Förderanlage entlang der Förderstrecke einen Abgabebereich mit einer Abgabeeinrichtung zum Abgeben von Fördergütern an eine Übernahmevorrichtung aus.

Der Abgabebereich wird insbesondere durch den Wirkungsbereich der Abgabeeinrichtung entlang der Förderstrecke definiert.

Der Abgabebereich schliesst in Förderrichtung betrachtet insbesondere unmittelbar an eine Beschleunigungsstrecke an.

Die dem Förderorgan aufliegenden Förderbehälter sind nun entlang der Beschleunigungsstrecke über die Rollen in einer von der Fördergeschwindigkeit des Förderorgans abweichenden Geschwindigkeit dem Abgabebereich zuführbar.

Die Übernahmevorrichtung ist erfindungsgemäß ein Wegförderer. Der Wegförderer kann insbesondere ebenfalls Förderbehälter umfassen.

Die Förderbahnen der Förderanlage und des Wegförderers verlaufen entlang des Abgabebereichs und insbesondere auch entlang der Beschleunigungsstrecke insbesondere parallel zueinander. Die Förderrichtungen der beiden Förderer sind im Abgabebereich und insbesondere auch entlang der Beschleunigungsstrecke insbesondere gleichgerichtet. Die besagten Förderbahnen verlaufen entlang des Abgabebereichs und insbesondere auch entlang der Beschleunigungsstrecke insbesondere geradlinig.

Die Beschleunigungsstrecke erlaubt nun, die Förderbehälter der Förderanlage in eine takt-synchrone Förderung mit den Förderbehältern des Wegförderers zu bringen, wobei im Abgabebereich insbesondere Paarungen von nebeneinander angeordneten Förderbehältern zwecks Abgabe der Fördergüter ausgebildet werden.

Die Förderbehälter des Wegförderers werden insbesondere gleichmässig voneinander beabstandet entlang einer parallel zum Abgabebereich und insbesondere auch entlang einer parallel zur Beschleunigungsstrecke verlaufenden Förderstrecke bewegt.

Der Wegförderer kann zum Beispiel ein Kippschalenförderer sein. Der Kippschalenförderer kann Teil eines Sorters, beispielsweise eines Kippschalensorter sein.

Die Förderanlage kann gemäss einer besonderen Ausführungsform eine Mehrzahl von in Förderrichtung entlang der Förderstrecke nacheinander angeordnete Abgabebereiche ausbilden. Die Abgabebereiche können wie an anderer Stelle bereits beschrieben ausgebildet sein und entsprechende Abgabeeinrichtungen, wie z. B. weiter unten beschrieben, enthalten.

Vor jedem Abgabebereich kann in Förderrichtung eine Staustrecke, gegebenenfalls mit Entlassungseinrichtung, gemäss bereits an anderer Stelle beschriebenem Aufbau, Anordnung und Funktionsweise angeordnet sein.

Vor jedem Abgabebereich kann in Förderrichtung eine Beschleunigungsstrecke gemäss bereits an anderer Stelle beschriebenem Aufbau, Anordnung und Funktionsweise angeordnet sein. Die Beschleunigungsstrecke kann gegebenenfalls mit der erwähnten Staustrecke kombiniert sein, wie ebenfalls bereits an anderer Stelle beschrieben.

Die Förderanlage gemäss der vorgenannten Ausführungsform kann insbesondere ein Sorter sein.

Die Abgabeeinrichtung kann zwecks Abgabe von Fördergütern an eine Übernahmevorrichtung einen Neigemechanismus zum in Förderrichtung F betrachtet seitlichen Neigen bzw. Kippen bzw. Schrägstellen von Förderbehältern umfassen.

Die Förderbehälter werden durch den Neigemechanismus an einer Seite angehoben, insbesondere an einer Kurzseite. Dies kann über eine entsprechende Kulissenführung des Neigemechanismus erfolgen.

Der Neigemechanismus hebt die Förderbehälter mindestens teilweise, insbesondere vollständig vom Förderorgan ab. Das Förderorgan bewegt sich entlang des Neigemechanismus insbesondere unterhalb des angehobenen Förderbehälters in Förderrichtung fort.

Entsprechend können die Förderbehälter durch den Neigemechanismus oberhalb bzw. über dem Förderorgan gefördert werden. Die Förderbehälter sind in angehobener Position entlang des Neigemechanismus von der Förderbewegung des Förderorgans insbesondere entkoppelt.

Der Neigemechanismus kann einen Förderantrieb enthalten, mittels welchem die angehobenen Förderbehälter unabhängig vom Förderorgan in Förderrichtung gefördert werden können. Der Förderantrieb kann Antriebsriemen umfassen.

Die Förderbehälter werden nun im Abgabebereich durch den Neigemechanismus angehoben, beispielsweise an einer Seite, und in eine Schrägstellung versetzt. Dadurch rutscht das Fördergut in Richtung Übernahmevorrichtung, z. B. auf einen Förderbehälter eines Wegförderers, ab.

Im Anschluss an die Abgabe des Fördergutes führt der Neigemechanismus, insbesondere dessen Kulissenführung den Förderbehälter durch Absenken und Aufheben der Schrägstellung wieder auf das Förderorgan zurück.

Die Abgabeeinrichtung bzw. der Neigemechanismus kann eine Weiche umfassen, welche mit der Steuerungseinrichtung zusammenwirkt, und über welche die Förderbehälter zwecks selektiver Abgabe der Fördergüter wahlweise in eine Schrägstellung durch den Neigemechanismus geführt oder - ohne Schrägstellung - auf dem Förderorgan weitergefördert werden können.

Das Förderorgan wird also ebenfalls unterhalb der Förderbehälter durch den Abgabebereich bewegt.

Die Förderanlage kann eine zusätzliche Abgabeeinrichtung aufweisen, in welcher alle Förderbehälter, welche noch nicht entleert worden sind, entleert werden. Mit anderen Worten werden in der zusätzlichen Abgabeeinrichtung Fördergüter aus all denjenigen Förderbehältern abgegeben, in welchen sich vor der zusätzlichen Abgabeeinrichtung noch Fördergüter befinden.

Die Förderbehälter werden nach dem Abgabebereich in Förderrichtung entlang der Förderstrecke insbesondere wieder zurück in die Beschickungsstrecke gefördert.

In einer Weiterbildung der Erfindung kann in Förderrichtung betrachtet zwischen dem Abgabebereich und der Beschickungsstrecke eine Staustrecke ausgebildet werden. Die Staustrecke erlaubt die gesteuerte Förderung von Förderbehältern in die Beschickungsstrecke.

Die Förderanlage kann in Förderrichtung betrachtet seitlich vom Förderorgan Seitenführungen ausbilden. Diese sollen ein Abrutschen der Förderbehälter vom Förderorgan verhindern, insbesondere in der Wendelstrecke.

Die Erfindung betrifft im Weiteren auch ein Fördersystem umfassend eine Förderanlage gemäss obiger Beschreibung sowie eine Übernahmevorrichtung, ebenfalls gemäss obiger Beschreibung, wobei die Förderanlage als Zuförderer der Übernahmevorrichtung ausgelegt ist. Die Förderanlage ist insbesondere ein Bereitstellungsförderer für die Übernahmevorrichtung.

Die Förderanlage und die Übernahmevorrichtung bilden einen Transferbereich zum Transferieren von Fördergütern von der Förderanlage an die Übernahmevorrichtung aus. Der Abgabebereich der Förderanlage ist dabei Teil des Transferbereichs.

Die Übernahmevorrichtung ist wie bereits erwähnt insbesondere eine weitere Förderanlage bzw. ein Wegförderer.

Die Erfindung betrifft im Weiteren auch ein Verfahren zur Abgabe von Fördergütern von der Förderanlage gemäss obiger Beschreibung an eine Übernahmevorrichtung, ebenfalls gemäss obiger Beschreibung.

Gemäss Verfahren werden die dem Förderorgan verbindungsfrei aufliegenden Förderbehälter entlang einer Staustrecke gepuffert und über eine Entlassungseinrichtung einzeln in eine Beschleunigungsstrecke entlassen und über die Beschleunigungsstrecke zum Abgabebereich hin in Abweichung von der Fördergeschwindigkeit des Förderorgans beschleunigt.

Die Fördergüter sind insbesondere Stückgüter. Die Fördergüter sind insbesondere Pakete. Die Fördergüter können auch Gepäckstücke sein. Fördergut in einer Förderschale kann eines oder mehrere Einzelstücke umfassen. Die Fördergüter können mehrteilige Gebinde, Stapel, Zusammenstellungen, Versandgruppen und dergleichen sein.

Die vorliegende Erfindung findet insbesondere Einsatz in Umschlagzentren von Paketdiensten, in Distributionszentren oder in Verteilanlagen für Gepäck.

Gemäss einer Weiterbildung der Förderanlage sind die Rollenhalterungen und die Rollen jeweils Teil eines Rollenmechanismus, wobei die verschiedenen Zustände der Rollen durch Wirkelemente hervorgerufen werden, welche auf den Rollenmechanismus einwirken.

Gemäss einer Weiterbildung der Förderanlage bilden die Rollenhalterungen und die Rollen zusammen mit den Wirkelementen einen Bewegungsmechanismus, mit welchem der mindestens eine Förderbehälter relativ zum Förderorgan bewegbar ist.

Gemäss einer Weiterbildung der Förderanlage sind die Rollen mittels Wirkelementen jeweils zwischen mindestens zwei räumlich unterschiedlichen Positionen bewegbar, in welchen die Rollen unterschiedliche Zustände aus der Gruppe von Zuständen, umfassend die Arretierstellung, Freilaufstellung und Antriebsstellung, einnehmen.

Gemäss einer Weiterbildung der Förderanlage sind die Rollen mittels den Wirkelementen jeweils senkrecht zur Hauptfläche zwischen mindestens zwei Positionen bewegbar.

Gemäss einer Weiterbildung der Förderanlage sind entlang der Staustrecke Stellmittel angeordnet, mittels welchen die Rollen in die Freilaufstellung bewegbar sind bzw. in dieser gehalten werden.

Gemäss einer Weiterbildung der Förderanlage sind die dem Förderorgan aufliegenden Förderbehälter entlang der Beschleunigungsstrecke über die Rollen in einer von der Fördergeschwindigkeit des Förderorgans abweichenden Geschwindigkeit bewegbar.

Gemäss einer Weiterbildung der Förderanlage umfasst die Abrollführung ein über einen Antrieb in Förderrichtung aktiv antreibbares Abrollelement, auf welchem die Rollen abrollen.

Gemäss einer Weiterbildung der Förderanlage ist das Abrollelement über eine Steuerungseinrichtung variabel antreibbar.

Gemäss einer Weiterbildung der Förderanlage hebt der Neigemechanismus die Förderbehälter mindestens teilweise, insbesondere vollständig vom Förderorgan ab.

Gemäss einer Weiterbildung der Förderanlage können die Förderbehälter durch den Neigemechanismus über dem Förderorgan gefördert werden.

Gemäss einer Weiterbildung der Förderanlage enthält der Neigemechanismus einen Förderantrieb, mittels welchem die Förderbehälter in Förderrichtung gefördert werden können.

Gemäss einer Weiterbildung der Förderanlage enthält diese eine zusätzliche Abgabeeinrichtung, in welcher alle Förderbehälter, welche noch nicht entleert worden sind, entleert werden.

Gemäss einer Weiterbildung der Förderanlage umfasst die Beschickungseinrichtung wenigstens eine Beschickungsstation.

Gemäss einer Weiterbildung der Förderanlage bildet die Förderanlage eine geschlossene Förderstrecke aus.

Gemäss einer Weiterbildung der Förderanlage bildet die Förderanlage in Förderrichtung betrachtet seitlich vom Förderorgan Seitenführungen aus.

Nachfolgend wird der Erfindungsgegenstand anhand von Ausführungsbeispielen, welche in den beiliegenden Figuren dargestellt sind näher erläutert. Es zeigen jeweils schematisch:
- Figur 1:: eine perspektivische Ansicht einer erfindungsgemässen Förderanlage;
- Figur 2:: eine Draufsicht einer Förderschale der Förderanlage;
- Figur 3:: eine perspektivische Ansicht einer Förderschale;
- Figur 4:: eine perspektivische Ansicht eines Fördersystems mit einer erfindungsgemässen Förderanlage;
- Figur 5:: eine Draufsicht des Fördersystems nach Figur 4;
- Figur 6:: eine perspektivische Detailansicht des Fördersystems nach Figur 4 aus dem Bereich der Förderanlage;
- Figur 7:: eine perspektivische Ansicht aus dem Abgabebereich der Förderanlage;
- Figur 8:: eine perspektivische Ansicht eines Neigemechanismus im Abgabebereich;
- Figur 9:: eine perspektivische Ansicht von schräg oben auf eine Ausführungsform eines Förderorgans der Förderanlage;
- Figur 10:: eine Ansicht des Förderorgans aus Figur 9 von vorne;
- Figur 11:: einen Ausschnitt einer Ansicht des Förderorgans aus Figur 9 von vorne, mit einer Rolle in Freilaufstellung;
- Figur 12:: einen Ausschnitt analog zu Figur 11 mit der Rolle in Antriebstellung;
- Figur 13:: einen Ausschnitt analog zu Figur 11 mit der Rolle in Arretierstellung;
- Figur 14:: eine perspektivische Ansicht von oben auf einen Ausschnitt der Förderanlage, umfassend das Förderorgan gemäss Figur 9;
- Figur 15:: eine Ansicht von vorne auf einen Ausschnitt der Förderanlage gemäss Figur 14.

Grundsätzlich sind in den Figuren gleiche Teile mit gleichen Bezugszeichen versehen.

Für das Verständnis der Erfindung sind gewisse Merkmale in den Figuren nicht dargestellt. Die nachfolgend beschriebenen Ausführungsbeispiele stehen lediglich beispielhaft für den Erfindungsgegenstand und haben keine beschränkende Wirkung.

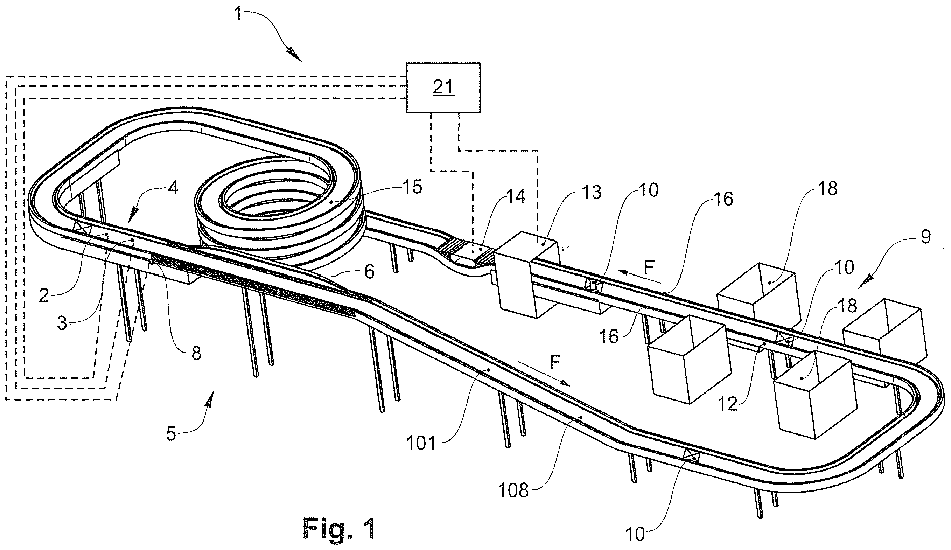

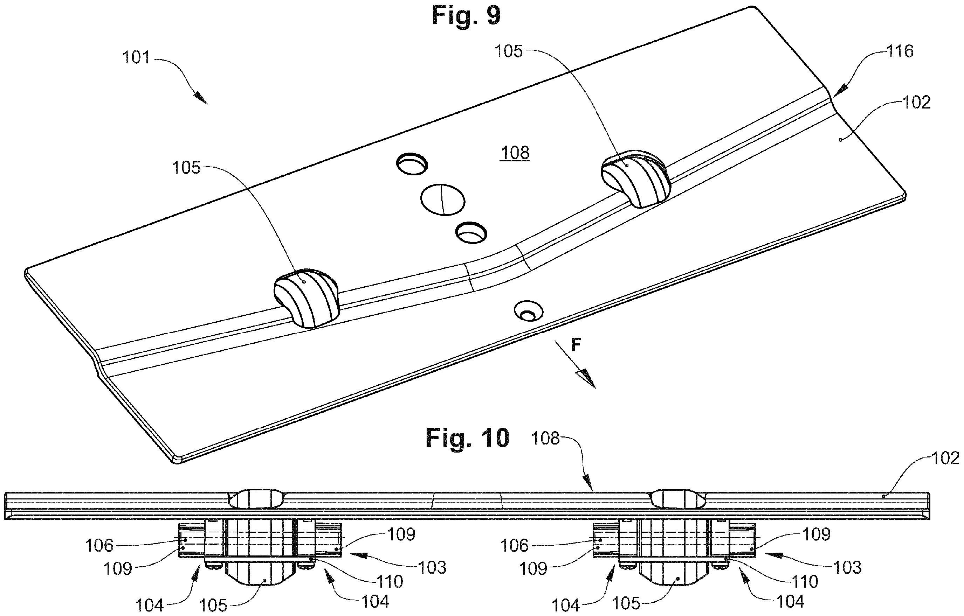

Die **Figur 1** zeigt ein Ausführungsbeispiel einer erfindungsgemässen Förderanlage 1. Die Förderanlage 1 ist als Förderer mit einer geschlossener Förderstrecke ausgebildet und weist ein umlaufendes Förderorgan 101 mit einem flächenförmigen Förderelement 102 auf. Das flächenförmige Förderelement 102 bildet eine Hauptfläche 108 aus, über welcher das Fördergut 20 gefördert wird (siehe auch Figuren 9 bis 14). Das Förderorgan 101 wird weiter unten anhand der Figuren 9 bis 14 noch ausführlich beschrieben.

Die Förderanlage 1 umfasst Förderbehälter 10 in Form von Förderschalen zur Aufnahme von Fördergütern 20, welche dem Förderorgan 101 verbindungsfrei aufliegen.

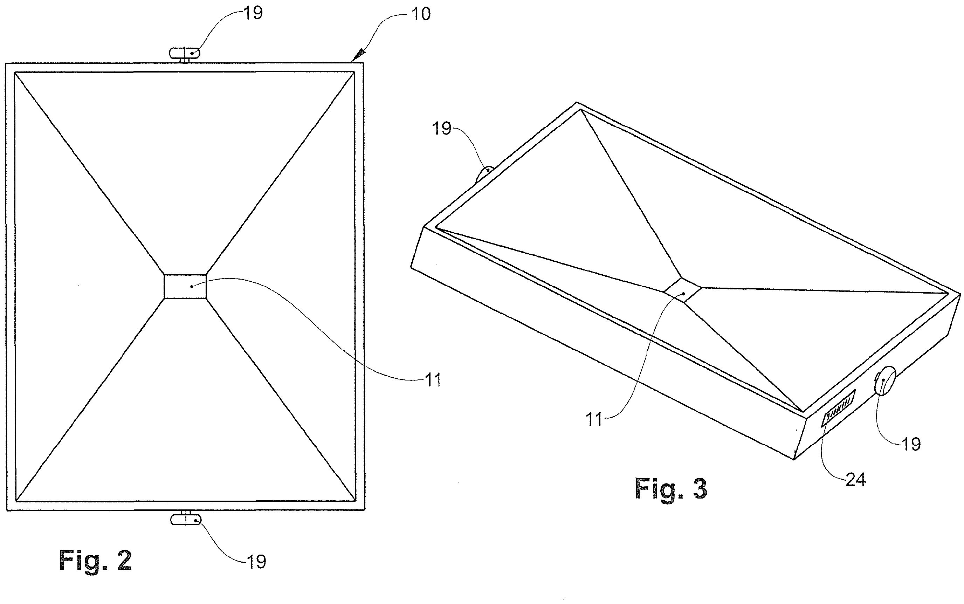

Die Förderschalen 10 bilden jeweils eine Vertiefung 11 zur Aufnahme der Fördergüter 20 auf. Dank der Vertiefung 11 werden die Fördergüter 20 seitlich gehalten (siehe auch **Figur 2 und 3**).

Die Vertiefung 11 weist zu den Seiten hin einen kontinuierlichen, rampenartigen Anstieg auf. Dieser begünstigt das Herausgleiten der Fördergüter 20 aus der Vertiefung 11 bei geneigter Förderschale 10.

An den Kurzseiten der Förderschalen 10 sind im Weiteren vorstehende Führungselemente 19 angeordnet, über welche die Förderschalen 10 entlang des weiter unten noch beschriebenen Neigemechanismus 6 geführt werden können. Es können jeweils eines oder mehrere Führungselemente 19 an einer Seite angeordnet sein, insbesondere an einer Kurzseite.

Im Weiteren ist an der Förderschale 10 ein Informationsetikett angebracht, welches Informationen zur Förderschale 10 trägt, z. B. Informationen zur Identifikation der Förderschale 10 oder das Taragewicht der Förderschale 10 zwecks Berechnung des Gewichts des in der Förderschale 10 mitgeführten Fördergutes 20.

Die Förderanlage 1 bildet eine Beschickungsstrecke 9 aus, entlang welcher mehrere Beschickungsstationen 12 angeordnet sind, an welchen Fördergüter 20, insbesondere Pakete, manuell aus Speicherbehältern 18 entnommen und fortlaufend in die auf dem Förderorgan 101 vorbei geförderten Förderschalen 10 abgelegt werden. Das Förderorgan 101 wird hierzu in einer kontinuierlichen oder variablen Fördergeschwindigkeit angetrieben.

Die Förderschalen 10 mit den Fördergütern 20 werden auf dem Förderorgan 101 in Förderrichtung F an einer Erfassungseinrichtung 13 vorbei gefördert. Die Erfassungseinrichtung 13 ist als optischer Mehrseitenscanner ausgebildet, welcher die Oberfläche der Fördergüter 20 von mehreren Seiten nach Identifikationsinformationen absucht. Die erfassten Identifikationsinformationen werden zur weiteren Verarbeitung einer Steuerungseinrichtung 21 übermittelt.

In der Steuerungseinrichtung 21 werden aus den Identifikationsinformationen Adressdaten ermittelt. Der Vorgang vom Erfassen der Identifikationsinformationen der Fördergüter 20 bis zum Vorliegen der Adressdaten, kann eine halbe bis eine Minute dauern.

Die Förderschalen 10 mit den Fördergütern 20 werden im Anschluss an die Erfassungseinrichtung 13 einer Wägeeinrichtung 14 zugefördert, mittels welcher das Gewicht der Fördergüter 20 bestimmt wird.

Im Anschluss an die Wägeeinrichtung 14 werden die Fördergüter 20 entlang einer Wendelstrecke 15 auf ein höheres Förderniveau gefördert.

Die Wendelstrecke 15 dient unter anderem der Überbrückung der Zeit bis die Adressdaten zu den betreffenden Fördergütern 20 von der Steuerungseinrichtung 21 ermittelt worden sind. Die Fördergüter 20 sollen nämlich erst in den Abgabebereich 5 gefördert werden, wenn die Adressdaten der Fördergüter 20 ermittelt sind bzw. wenn feststeht, dass zu einem Fördergut 20 keine Adressdaten ermittelt werden konnten.

An die Wendelstrecke 15 schliesst eine geradlinige Staustrecke 2 an, entlang welcher die Fördergüter 20 bis zu ihrer Entlassung in Richtung Abgabebereich 5 zurückgehalten, d.h. gepuffert werden.

Hierzu ist in Förderrichtung F betrachtet am Ende der Staustrecke 2 eine Entlassungseinrichtung 3 vorgesehen, welche von der Steuerungseinrichtung 21 gesteuert wird, und mittels welcher die Fördergüter 20 einzeln aus der Staustrecke 2 in Richtung Abgabebereich 5 entlassen werden können.

Die Staustrecke 2 dient folglich dem Puffern der Fördergüter 20 vor dem Abgabebereich 5. Das Puffern der Fördergüter 20 bezweckt einerseits eine gesteuerte Abgabe von Fördergütern 20 in Richtung Abgabebereich 5 und anderseits soll der Puffer einen regelmässigen Nachschub an Fördergütern 20 gewährleisten, welche dem Abgabebereich 5 zuzuführen sind.

Da die Fördergüter 20 entlang der Staustrecke 2 angehalten bzw. mit einer wesentlich niedrigeren Geschwindigkeit gefördert werden als die Fördergeschwindigkeit des Förderorgans 101, sind Mittel vorgesehen, welche die Förderung der Fördergüter 20 entlang der Staustrecke 2 von der Fördergeschwindigkeit des Förderorgans 101 entkoppeln. Diese Mittel sind weiter unten im Zusammenhang mit der Beschreibung des Förderorgans 101 noch näher erläutert.

Wie bereits erwähnt, ist am Ende der Staustrecke 2 eine Entlassungseinrichtung angeordnet, mittels welcher die Fördergüter 20 einzeln aus der Staustrecke 2 entlassen werden.

Die aus der Staustrecke 2 entlassenen Fördergüter 20, werden in eine, vor dem Abgabebereich 5 angeordnete Beschleunigungsstrecke 4 gefördert, entlang welcher die Fördergüter 20 beschleunigt und mit einer von der Fördergeschwindigkeit des Förderorgans 101 abweichenden, variablen Geschwindigkeit zum Abgabereich 5 hin gefördert werden.

An der Beschleunigungsstrecke 4 sind hierzu, wie weiter unten noch näher erläutert, Mittel vorgesehen, welche die Förderung der Fördergüter 20 entlang der Beschleunigungsstrecke 4 von der Fördergeschwindigkeit des Förderorgans 101 entkoppeln.

Die Beschleunigung bzw. die Geschwindigkeit der Fördergüter 20 entlang der Beschleunigungsstrecke 4 wird über die Steuerungseinrichtung 21 gesteuert. Die Beschleunigungsstrecke 4 dient dazu, die Förderschalen 10 mit den Fördergütern 20 auf die Fördergeschwindigkeit eines als Wegförderer ausgebildeten Kippschalensorters 61 zu beschleunigen und jeweils in eine taktsynchrone Förderung mit Kippschalen 62 eines als Wegförderers ausgebildeten Kippschalensorter 61 zu bringen, an welchen die Fördergüter 20 abgegeben werden sollen.

Das heisst, die Förderschalen 10 der zufördernden Förderanlage 1 werden entlang der Beschleunigungsstrecke 4 derart beschleunigt und mit einer Fördergeschwindigkeit bewegt, dass diese taktsynchron mit den Kippschalen 62 des Kippschalensorters 61 zum Abgabebereich 5 gefördert werden und mit Kippschalen 62 so genannten Transferpaarungen ausbilden.

Transferpaarung bedeutet, dass in Förderrichtung F betrachtet zwecks Abgabe der Fördergüter 20 jeweils eine Förderschale 10 der zufördernden Förderanlage 1 neben einer Kippschale 62 des Kippschalensorters 61 angeordnet ist.

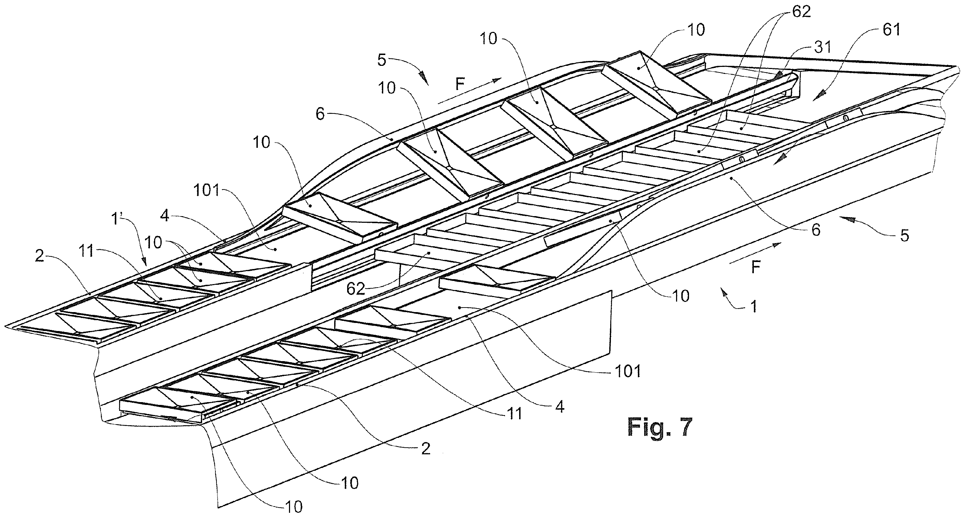

Die Förderbahn der Förderschalen 10 der zufördernden Förderanlage 1 und die Förderbahn der Kippschalen 62 des wegfördernden Kippschalensorters 61 verlaufen entlang der Beschleunigungsstrecke 4 parallel nebeneinander. Die Förderschalen 10 der Förderanlage 1 und die Kippschalen 62 des Kippschalensorters 61 bewegen sich entsprechend gleichgerichtet entlang der Beschleunigungsstrecke 4 (siehe auch Figur 7).

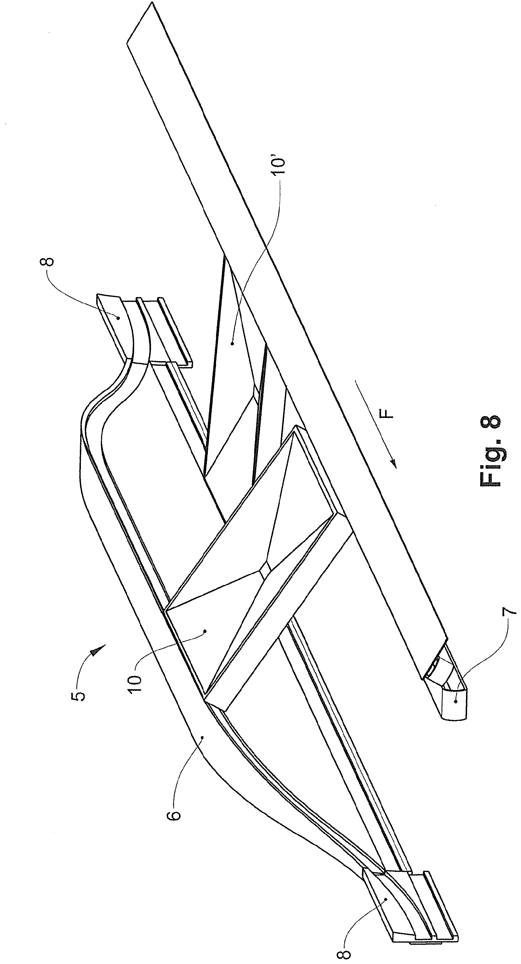

Im Abgabebereich 4 ist ein Neigemechanismus 6 angeordnet, welche die Förderschalen 10 zwecks Abgabe der Fördergüter 20 an einen Wegförderer 61 in eine in Förderrichtung F betrachtet seitlich geneigte Lage bewegt. Hierzu wird die Förderschale 10 an der entsprechenden Kurzseite über eine Kulissenführung angehoben (siehe auch **Figur 7** **und** **8**). Die Kulissenführung wirkt dabei mit dem bereits oben erwähnten Führungselement 19 an der Kurzseite der Förderschale 10 zusammen. Das heisst, die Kulissenführung bildet eine Führungsbahn für das Führungselement 19 aus.

Bei diesem Vorgang wird die Förderschale 10 vom Förderorgan 101 abgehoben, so dass das sich unterhalb der Förderschale 10 in Förderrichtung F fortbewegende Förderorgan 101 für die betreffende Förderschale 10 im Bereich des Neigemechanismus 6 nicht mehr förderwirksam ist.

Die der angehobenen Kurzseite der Förderschale 10 gegenüber liegende, tiefer liegende zweite Kurzseite bzw. das an dieser Kurzseite angeordnete Führungselement 19 der Förderschale 10 wird zwecks Antreiben der Förderschale 10 in Förderrichtung F durch den Transferbereich 5 mit einem Förderantrieb 7 des Neigemechanismus 6 in Kontakt gebracht.

Der Förderantrieb 7 umfasst einen umlaufenden Förderriemen, welcher die Förderschalen 10 anstelle des sich unterhalb der Förderschalen 10 in Förderrichtung F weiter bewegenden Förderorgans 101 entlang des Neigemechanismus 6 in Förderrichtung F weiterfördert.

Die Förderbahn der Förderschalen 10 der zufördernden Förderanlage 1 und die Förderbahn der Kippschalen 62 des wegfördernden Kippschalensorters 61 verlaufen im Abgabebereich 5 parallel nebeneinander. Die Förderschalen 10 der Förderanlage 1 und die Kippschalen 62 des Kippschalensorters 61 bewegen sich entsprechend gleichgerichtet durch den Abgabebereich 5 (siehe auch Figur 7).

Sobald nun die Förderschale 10 entlang des Neigemechanismus 6 eine ausreichende Schräglage bzw. Neigung erreicht haben, rutscht das Fördergut 10 aus der Vertiefung 11 der Förderschale 10 heraus und gleitet in die benachbarten Kippschale 62 der Transferpaarung ab.

Nach der Abgabe der Fördergüter 20 aus den Förderschalen 10 werden diese entlang des Neigemechanismus 6 über die Kulissenführung wieder in eine horizontale Lage bewegt und wieder auf dem sich unterhalb der Förderschalen 10 vorbeibewegenden Förderorgan 101 abgelegt. Die Förderschalen 10 verlassen mit dem Ablegen auf das Förderorgan 101 den Neigemechanismus 6 und werden fortan wieder durch das Förderorgan 101 gefördert.

Eingangs des Neigemechanismus 6 ist eine Weiche 8 angeordnet, welche mit der Steuerungseinrichtung 21 verbunden ist (siehe Figur 8). Die Weiche 8 kann zwischen zwei Positionen geschaltet werden, welche erlauben die Förderschalen 10 der zufördernden Förderanlage 1, 1' wahlweise über die schräg stellende Kulissenführung des Neigemechanismus 6 oder weiterhin dem Förderorgan 101 - ohne Schrägstellung - aufliegend weiter zu fördern. Entsprechend wird von dieser Förderschale 10' auch kein Fördergut 20 abgegeben.

Die Förderschale 10' kann beispielsweise dem Förderelement 101 aufliegend am Neigemechanismus vorbei gefördert werden, wenn diese kein Fördergut enthält oder wenn das in der Förderschale 10' geförderte Fördergut 20 nicht abgegeben werden soll.

Dies kann z. B. der Fall sein, wenn die Adresse des Fördergutes 20 nicht ermittelt werden konnte, weil die dazugehörigen Identifikationsinformationen auf dem Fördergut 20 durch die Erfassungseinrichtung 13 nicht auslesbar oder nicht vorhanden waren oder diese sich auf einer dem Förderorgan 101 aufliegenden, der Erfassungseinrichtung 13 nicht zugänglichen Unterseite des Fördergutes 20 befinden.

Die Förderschalen 10 werden im Anschluss an den Abgabebereich 5 entlang einer Rampe wieder auf das tiefere Förderniveau der Beschickungsstrecke 9 gefördert und in die Beschickungsstrecke 9 zurückgefördert.

In Förderrichtung F betrachtet nach dem Abgabebereich 5 und vor der Beschickungsstrecke 9 wird eine weitere Staustrecke 17 ausgebildet, entlang welcher die Förderschalen 10 gestaut werden können. Die Förderschalen 10 können auf diese Weise gesteuert und/oder dosiert aus der Staustrecke 17 in die Beschickungsstrecke 9 entlassen werden, wo diese erneut manuell mit Fördergütern 20 beschickt werden. Ein neuer Arbeitszyklus kann beginnen.

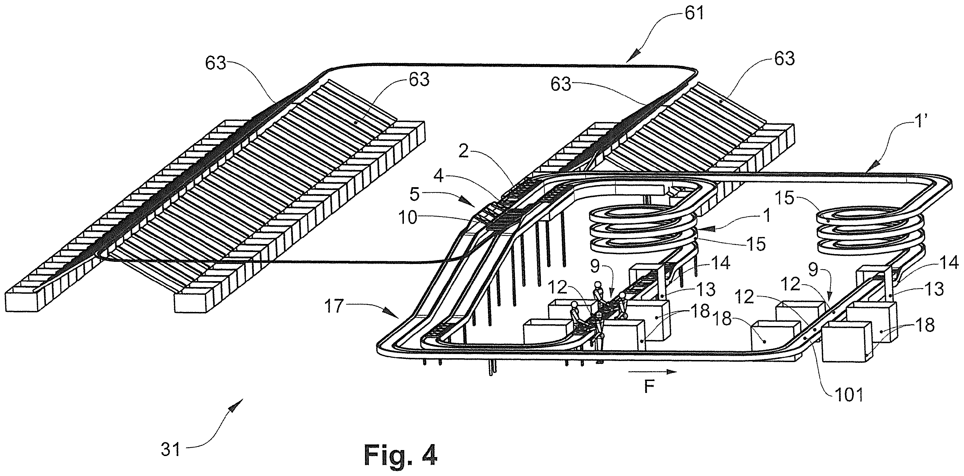

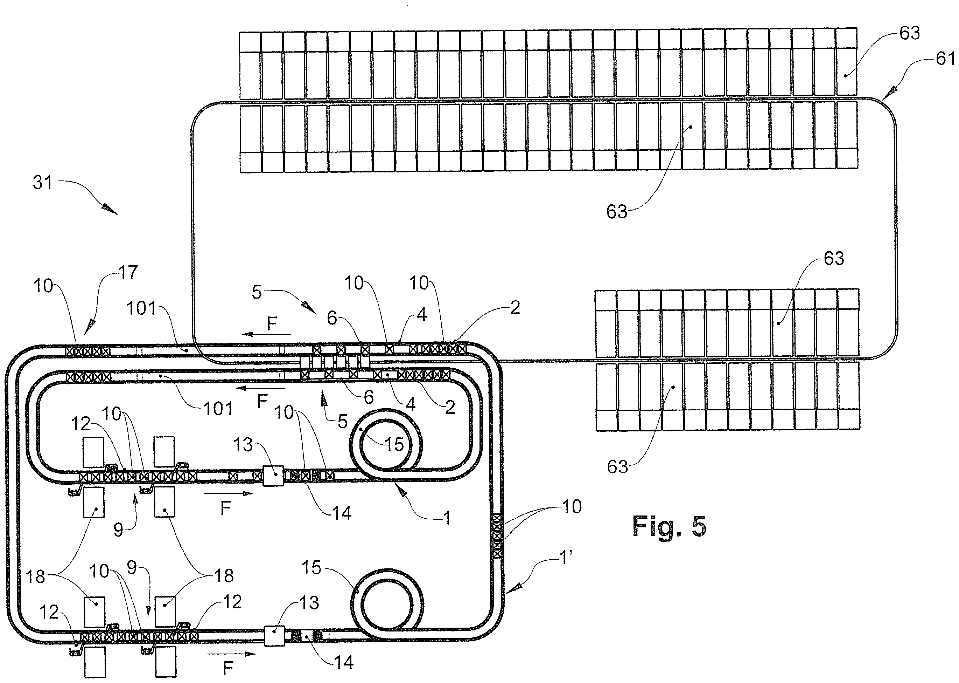

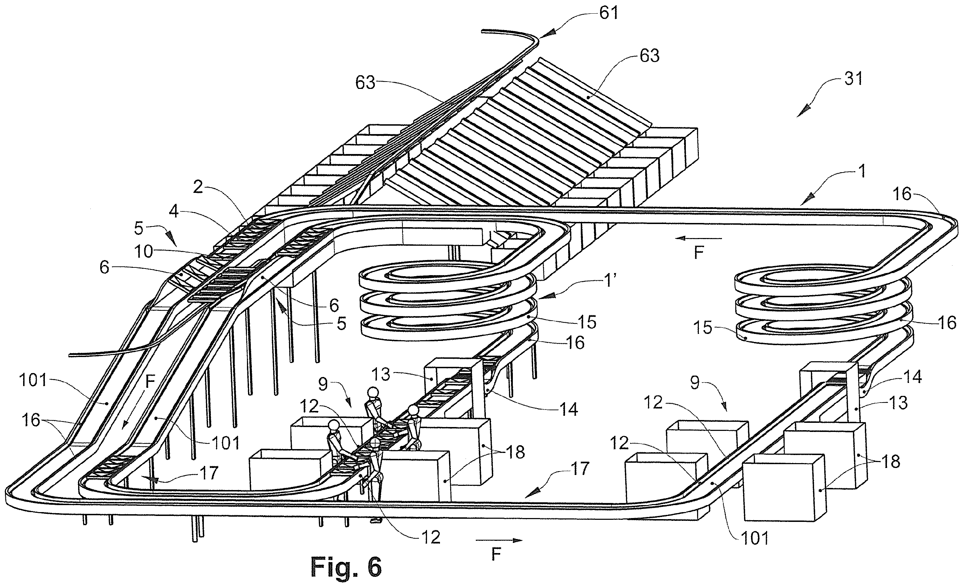

Die **Figuren 4 bis 6** zeigen ein Fördersystem 31 in verschiedenen Ansichten. Das Fördersystem 31 umfasst zwei zufördernde Förderanlagen 1, 1' der oben beschriebenen Art. Das heisst, die beiden zufördernden Förderanlagen 1, 1' weisen grundsätzlich denselben Aufbau auf. Allerdings weicht die Führung der Förderstrecke der beiden Förderanlagen 1, 1' voneinander ab.

Im Weiteren umfasst das Fördersystem 31 einen als Kippschalensorter ausgebildeten Wegförderer 61. Der Kippschalensorter 61 bildet eine umlaufende Förderstrecke aus, entlang welcher so genannte Kippschalen 62 zur Förderung der Fördergüter 20 bewegt werden. Die Kippschalen 62 sind in gleichmässigen Abständen zueinander an einem an dieser Stelle nicht näher beschriebenen, kettenartig zusammenhängenden Förderorgan befestigt. Das Förderorgan ist angetrieben und bewegt die Kippschalen 62 entlang der Förderstrecke.

Die Kippschalen 62 des Kippschalensorters 61 weisen jeweils ein Gelenk auf, über welches diese zwecks Ausschleusen der Fördergüter 20 in Förderrichtung F betrachtet zur Seite hin geschwenkt werden können.

Entlang der Förderstrecke des Kippschalensorters 61 sind eine Vielzahl von Ausschleusstationen 63 zum gesteuerten Ausschleusen der Fördergüter 20 aus dem Sorter 61 gemäss definierten Sortierregeln angeordnet.

Der Kippschalensorter 61 und die beiden zufördernden Förderanlagen 1, 1' bilden einen Transferbereich 5 aus, welcher den Abgabebereich 4 der Förderanlage 1 gemäss Figur 1 miteinschliesst.

Die Förderbahnen des Kippschalensorters 61 und der beiden zufördernden Förderanlagen 1, 1' verlaufen sowohl im Transferbereich 5 als auch entlang der unmittelbar stromaufwärts angeordneten Beschleunigungsstrecken 4 der zufördemden Förderanlagen 1, 1' parallel zueinander. Die Förderbahn des Kippschalensorters 61 verläuft sowohl entlang der Beschleunigungsstrecken 4 der zufördernden Förderanlagen 1, 1' als auch im Transferbereich 5 zwischen den Förderbahnen der beiden Förderanlagen 1, 1'.

Die beiden Förderanlagen 1, 1' weisen im Transferbereich 4 jeweils einen oben beschriebenen Neigemechanismus 6 auf, welche einander gegenüber liegend angeordnet sind, derart, dass die Förderschalen 10 der zufördernden Förderanlagen 1, '1 gegeneinander, d.h. zur dazwischen verlaufenden Förderbahn des Kippschalensorters 61 hin geneigt werden (siehe **Figur 7**).

Die Kippschalen 62 des Kippschalensorters 61 können auf diese Weise von zwei Seiten mit Fördergütern beschickt werden. Das heisst, im Regelbetrieb wird jede zweite Kippschale 62 des Kippschalensorters/ Wegförderers 61 von einer ersten Seite und jede zweite um eins versetzte Kippschale 62 des Kippschalensorters/Wegförderers 61 von einer zweiten Seite mit einem Fördergut 20 beschickt.

Diese Anordnung rührt daher, dass der Kippschalensorter 62 mit einer rund doppelt so hohen Verarbeitungskapazität betrieben werden kann als die zufördernden Förderanlagen 1, 1', welche wie erwähnt manuell mit Fördergütern 20 beschickt werden müssen.

Im vorliegenden Fall werden die Kippschalen 61 des Kippschalensorters 61 entsprechend mit einer rund doppelt so hohen Geschwindigkeit angetrieben wie das Förderorgan 101 der zufördernden Förderanlage 1, 1'.

Durch die Abgabe von Fördergütern 20 von zwei parallel betriebenen, zufördernden Förderanlagen 1, 1' kann die Verarbeitungskapazität des Kippschalensorters 61 voll ausgeschöpft werden.

Entsprechend sind im Transferbereich 5 die Förderschalen 10 jeweils einer Förderanlage 1, 1' mit jeder zweiten Kippschale 62 des Kippschalensorters 61 gepaart. Die Förderschalen 10 der zufördernden Förderanlage 1, 1' weisen im Transferbereich 5 gegenüber den Kippschalen 62 folglich jeweils den doppelten Abstand zueinander auf.

Die Förderschalen 10 werden zur Ausbildung der oben genannten Anordnung im Transferbereich 5 entlang der Beschleunigungsstrecke 4 im Anschluss an die Staustrecke 2 entsprechend beschleunigt und unter Ausbildung von Transferpaarungen in eine taktsynchrone Förderung mit den Kippschalen 62 gebracht.

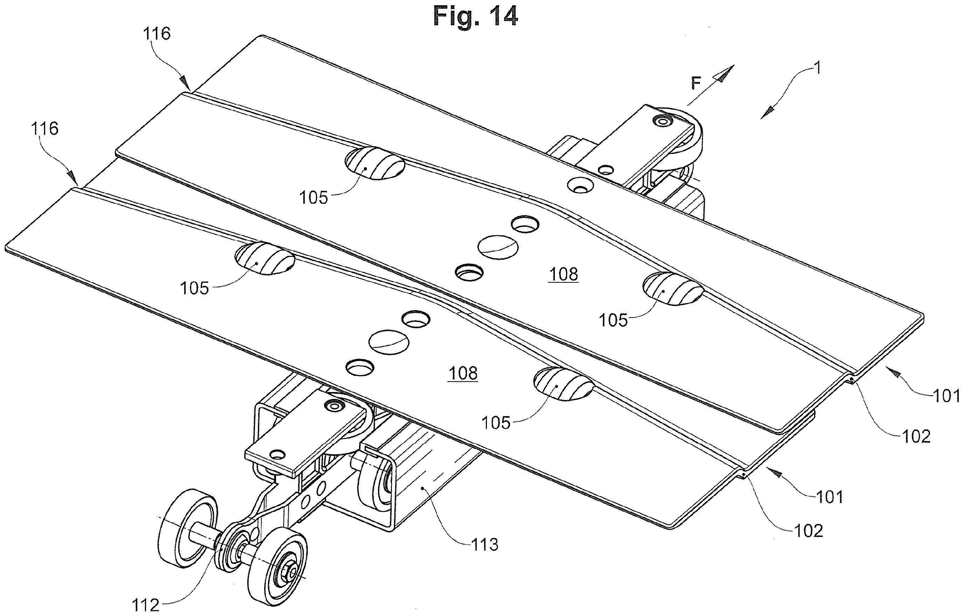

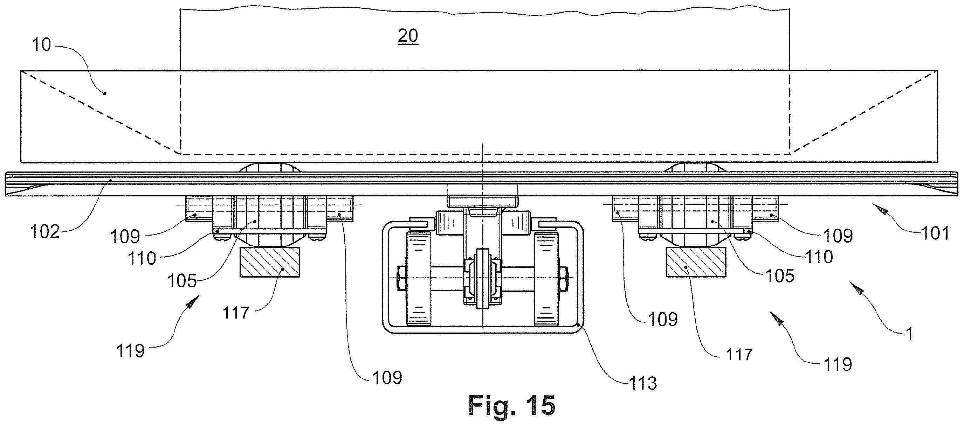

Die Figuren 9 bis 13 zeigen ein Ausführungsbeispiel eines Förderorgans 1 einer erfindungsgemässen Förderanlage 1. Die Figuren 14 und 15 zeigen Teile eines Ausführungsbeispiels einer erfindungsgemässen Fördereranlage 1.

Die **Figur 9** zeigt eine Baugruppe eines Förderorgans 101 wie es in der Förderanlage 1, 1' gemäss den Figuren 1 bis 8 eingesetzt wird. Die Baugruppe umfasst ein plattenartiges Förderelement 102, welches eine Breite quer zur Förderrichtung F von rund 40 cm aufweist.

Das Förderelement 102 ist auf seiner oberen Seite stufig ausgebildet. Eine Stufe 116 des Förderelements 102 ist quer zur Förderrichtung F mit einem Knick, also v-förmig ausgebildet und verbindet auf der oben liegenden Seite des Förderelements 102 eine tiefer liegende Fläche und eine höher liegende Fläche, wobei die höher liegende Fläche Teil einer Hauptfläche 108 des Förderorgans ist. Auf diese Hauptfläche 108 kann das zu fördernde Gut 20 zu liegen kommen. Im Regelfall wird das zu fördernde Gut 20 aber ausschliesslich auf den Rollen 105 am Förderelement 102 zu liegen kommen.

Die tiefer liegende Fläche der oberen Seite des Förderelements 102 wird von einem Teil eines benachbarten Förderelements 102 mindestens teilweise überdeckt. Die Baugruppe ist so ausgebildet, dass die plattenförmigen Förderelemente 102 benachbarter Baugruppen überlappen können. Dadurch wird eine sich entlang des Förderorgans 101 erstreckende Hauptfläche 108 ausgebildet.

Das Förderorgan 101 ist insbesondere Teil eines Plattenkettenförderers.

Die v-Form der Stufe 116 erlaubt dabei eine quer zur Förderrichtung F ausgerichtete Drehung (eine in einer die Hauptfläche 108 umfassenden Ebene liegende Drehung, ein sogenannter Seitenbogen) von benachbarten Baugruppen relativ zueinander. Die Stufe 116 im Förderelement 102 ist in Förderrichtung F schräg ausgebildet und weist abgesehen von abgerundeten Kanten eine Neigung von 45 Grad auf.

Das Förderelement 102 weist in der Hauptfläche 108 zwei Öffnungen auf, durch welche von unterhalb der Hauptfläche 108 je eine Rolle 105 durch das Förderelement 102 hindurch nach oben ragt. Die Öffnungen liegen in Förderrichtung F betrachtet etwa in der Mitte des Förderelements 102. Quer zur Förderrichtung F sind beide Öffnungen über die Breite des Förderelements 102 verteilt. Die Rollen 105 teilen das Förderelement 102 quer zur Förderrichtung F somit in drei Abschnitte auf.

Die **Figur 10** zeigt eine Ansicht der Baugruppe von vorne, also gegen die Förderrichtung F betrachtet. Die beiden Rollen 105 sind von jeweils einem Rollenmechanismus 103 umfasst und befinden sich in einer Arretierstellung. Beide Rollenmechanismen 103 sind jeweils unterhalb der Hauptfläche 108 angeordnet. Zusätzlich zu einer Rolle 105 umfasst jeder der beiden Rollenmechanismen 103 eine Rollenhalterung 104 und eine Arretiervorrichtung 110. Die Rollenhalterung 104 umfasst dabei zwei Achshalterungen 109, welche die Achse 106 der Rolle 105 beidseitig der Rolle 105 halten.

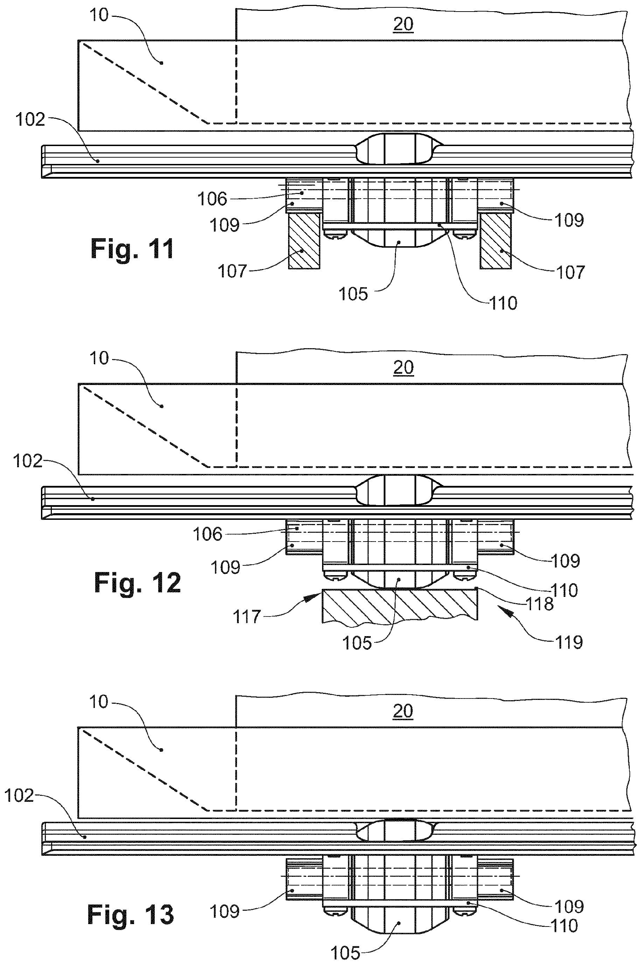

In **Figur 11** ist ein Ausschnitt einer Ansicht des Förderorgans 101 von vorne dargestellt, wobei sich eine Rolle 105 in Freilaufstellung befindet. Zudem ist in Figur 11 das Fördergut 20 dargestellt, welches in einer Förderschale 10 angeordnet ist, die auf der Lauffläche einer Rolle 105 aufliegt. Die Förderschale 10 wird durch Kontakt mit den Rollen 105 gefördert. Die Förderschale 10 kann aber auch mit der Hauptfläche 108 in Kontakt sein und beispielsweise mindestens teilweise darauf aufliegen.

Die Freilaufstellung der Rolle 105 in Figur 11 wird erreicht, indem die beiden Stellmittel 107, welche als separate Kulissen ausgebildet sind, die Achshalterungen 109 der Rolle 105 von unten stützen und gegen oben an den oberen Anschlag drücken. Die Achshalterungen 109 liegen also auf den Stellmitteln 107 auf und werden dadurch nach oben gegen das Förderelement 102 gedrückt, welches dafür obere Anschläge ausgebildet hat. In dieser Position befindet sich die Rolle 105 in Figur 11 in der Freilaufstellung, kann also frei drehen.

Die Förderschalen 10 können somit über die als Linearlager des Förderorgans 101 wirkenden Rollen 105 in Freilaufstellung mit wenig Kraftaufwand relativ zum Förderorgan 101 bewegt werden. Das Förderorgan 101 kann beispielsweise unter den Förderschalen 10 mit dem Fördergut 20 bewegt werden, ohne dass eine grosse Krafteinwirkung auf die Förderschalen 10 erfolgt. Mit anderen Worten ist eine Übertragung einer Bewegungsenergie des Förderorgans 101 auf die Förderschalen 10 mit den Rollen 105 in Freilaufstellung vernachlässigbar.

Entsprechend werden die Rollen 105 des Förderorgans 101 entlang der Staustrecken 2, 17 in einer Freilaufstellung gehalten, damit das Förderorgan 101 unterhalb der Förderschalen 10 hindurch bewegt werden kann, ohne dass diese eine merkliche Mitnahmekraft auf die aufgestauten Förderschalen 10 ausüben. Dadurch werden hohe Reibungskräfte zwischen dem Förderorgan 101 und den zurückgestauten Förderschalen 10 verhindert.

In **Figur 12** ist ein Ausschnitt analog zu Figur 11 dargestellt, allerdings mit der Rolle 105 in Antriebstellung. Im Gegensatz zu Figur 11 weist Figur 12 eine Abrollführung auf. Die Abrollführung 117 ist zwar ebenfalls als Kulisse ausgebildet, allerdings bildet die Kulisse auf seiner nach oben gerichteten Seite eine Abrollfläche aus, auf welcher die Lauffläche der Rolle 105 von oben aufliegt. Die Abrollführung 117 stützt somit die Rolle 105 von unten und treibt die Rolle 105, welche zusammen mit dem Förderorgan 101 über die Abrollführung 117 hinweg bewegt wird, dadurch an.

Die Abrollfläche ist eben und parallel zur Hauptfläche 108 ausgerichtet. Die Abrollführung 117 greift dabei an der Rolle 105 am weitest von der Rollenachse 106 entfernten Punkt an, ebenso wie die Förderschalen 10 auf der gegenüberliegenden Seite der Rolle 105. Die Übersetzung des Antriebs beträgt also 1, was bedeutet, dass die Geschwindigkeit zwischen Abrollführung 117 und Förderorgan 101 gleich gross ist wie die Geschwindigkeit zwischen den Förderschalen 10 und Förderorgan 101. Die Förderschale 10 bewegt sich also durch die Rolle 105 angetrieben doppelt so schnell relativ zur Abrollführung 117 wie das Förderorgan 101.

Die Abrollführung 117 kann wie in Figur 12 gezeigt ein Abrollelement 118, z. B. in Form eines umlaufenden Antriebsbandes 118 aufweisen. Die Ausführungen oben treffen somit nur auf eine nicht angetriebene Abrollführung zu.

Im Falle eines angetriebenen Abrollelementes 118 können die Rollen 105 mit einer beliebigen Geschwindigkeit und sowohl in als auch entgegen der Förderrichtung des Förderorgans 101 angetrieben werden, so dass die den Rollen 105 aufliegenden Förderschalen 10 eine gegenüber dem Förderorgan 101 höhere oder niedrigere Geschwindigkeit aufweisen oder gar in eine der Förderrichtung F des Förderorgans 101 entgegengesetzte Förderrichtung gefördert werden können.

Grundsätzlich können die Förderschalen 10 mit einer aktiv angetriebenen Abrollführung 117 mit einer von der Geschwindigkeit des Förderorgans 101 unabhängigen Fördergeschwindigkeit betrieben werden.

Abrollführung 117, Abrollelement 118 und Rolle 105 können zusammen als Beschleunigungseinrichtung 119 betrachtet werden.

Die Abrollführung 117 findet Einsatz entlang der Beschleunigungsstrecke 4 der zufördernden Förderanlage 1, 1', entlang welcher die Förderschalen 10 aus der Staustrecke 2 heraus beschleunigt werden, wie oben bereits ausführlich beschrieben.

Die räumliche Position der Rollenachse 106 und damit auch der Rolle 105 ist bei der Freilaufstellung und der Antriebstellung bei der vorliegenden Ausführungsform des Förderorgans 101 identisch, nämlich mit den Achshalterungen 109 am oberen Anschlag anliegend. Die Antriebstellung kann aber auch weiter unten liegen als die Freilaufstellung. Die Freilaufstellung wiederum kann in einer anderen Ausführungsform und/oder Anwendung aber auch weiter unten liegen als die Antriebstellung. Sowohl in der Antriebstellung als auch in der Freilaufstellung kann die Lauffläche der Rolle 105 aber nicht in Kontakt mit der Arretiervorrichtung 110 treten.

**Figur 13** zeigt einen Ausschnitt analog zu Figur 11. Dabei ist die Rolle 105 in Arretierstellung. Die Arretiervorrichtung 110 dient als unterer Anschlag für die Rolle 105, indem die Lauffläche der Rolle 105 in Schwerkraftrichtung auf dieser aufliegen kann.

Die Arretiervorrichtung 110 ist als Metallplatte ausgebildet, welche eine Öffnung aufweist. Diese Öffnung der Arretiervorrichtung 110 ist derart geformt und dimensioniert, dass die Rolle 105 in die Öffnung hineinragen kann und die Lauffläche der Rolle 105 mit Rändern der Öffnung der Arretiervorrichtung 110 in Kontaktschluss treten kann. Ist die Rolle 105 in der Arretierstellung, dann liegt die Lauffläche der Rolle 105 in Schwerkraftrichtung auf der Arretiervorrichtung 110 auf, und die Rolle 105 ragt teilweise durch die Öffnung der Arretiervorrichtung 110 hindurch. Die Arretiervorrichtung 110 ist starr und ortsfest am Förderelement 102 befestigt und beschränkt die Bewegung der Rolle 105 und somit auch der Rollenachse 106 als unterer Anschlag in der Schwerkraftrichtung. Die Arretiervorrichtung 110 ist im vorliegenden Fall auf Stützen aufgeschraubt, welche vom Förderelement 102 ausgebildet sind, und ist parallel zur Hauptfläche 108 angeordnet.

Die Rollenachse 106 ist als Metallstift ausgebildet, um welche die Rolle 105 frei drehend gelagert ist. Die Rollenachse 106 ragt auf beiden Seiten der Rolle 105 aus der Rolle 105 heraus, verläuft dann jeweils durch eine vom Förderelement 102 ausgebildete längliche Öffnung, welche als lineare Gleitführung ausgebildet ist, und endet auf beiden Seiten jeweils in einer Achshalterung 109. Die Rollenachse 106 ist starr und somit drehfest mit den Achshalterungen 109 verbunden. Die vom Förderelement 102 ausgebildete lineare Gleitführung führt die Rollenachse 106 orthogonal zur Hauptfläche 108. Das Förderelement 102 und die Achshalterungen 109 sind aus Kunststoff gefertigt.

Die Arretiervorrichtung 110 dient also als unterer Anschlag für die Rolle 105, indem die Lauffläche der Rolle 105 in Schwerkraftrichtung darauf aufliegen kann. Durch das Gewicht der Rolle und/oder der Förderschalen 10 bzw. des in diesen geförderten Förderguts 20 wirkt die Arretiervorrichtung 110 auf die Rolle 105 selbstarretierend. Die Rollenachse 106 kann durch die lineare Gleitführung in Richtung der Hauptfläche 108 bewegt werden, wobei das Förderelement 102 einen oberen Anschlag für diese Bewegung ausgebildet hat, an welchem die Achshalterungen 109 anschlagen können.

Das Förderelement 102 bildet somit einen oberen Anschlag für die Achshalterungen 109 und somit indirekt für die Rollenachsen 106 und die Rollen 105 aus, und in dieser Position befinden sich die Rollen 105 in der Freilaufstellung. Liegen die Rollen 105 am unteren Anschlag auf der Arretiervorrichtung 110 auf, befinden sich die Rollen in der Arretierstellung.

Die Achshalterungen 109, die vom Förderelement 102 ausgebildete lineare Gleitführung für die Rollenachse 106 und die vom Förderelement 102 ausgebildeten oberen Anschläge für die Achshalterungen 109 werden von der Rollenhalterung 104 umfasst.

Die Rollen 105 weisen eine bombierte Form auf. Der Querschnitt der Rollen 105 (also ein Schnitt entlang der Rollenachse 106) weist also eine konvexe Form auf, wobei die Lauffläche der Rollen 105 etwas abgeflacht ist. Die Laufflächen der Rollen 105 sind gummiert, die Rollen 105 selber bestehen aus Kunststoff.

In Figur 13 liegt die Rolle 105 nun auf der Arretiervorrichtung 110 auf und ist in der Arretierstellung. Die Arretierstellung ist die am weitesten unten liegende Stellung der Rolle 105. Durch das Gewicht der Rolle 105 und des zu fördernden Guts 20 wird die Rolle 105 in die Arretiervorrichtung 110 gedrückt, welche somit selbstarretierend funktioniert.

Wirken also keine Stellmittel oder Abrollführungen auf den Rollenmechanismus 103 ein, so befinden sich die Rollen 105, insbesondere wenn diese durch eine Förderschale 10 belastet sind, in der Arretierstellung.

Da die Rollen 105 insbesondere eine Lauffläche mit hohem Reibungskoeffizient aufweisen, wirken diese in der Arretierstellung als Mitnehmer für die Förderschalen 10.

Die Rollen 105 sind folglich entlang von Förderstreckenabschnitten, in welchen die Förderschalen 10 mit der Geschwindigkeit des Förderorgans 101 gefördert werden sollen, in Arretierstellung. Dies ist beispielsweise entlang der Beschickungsstrecke 9 der Fall.

Die **Figur 14** zeigt eine perspektivische Ansicht von oben auf einen Ausschnitt einer erfindungsgemässen Förderanlage 1, 1', welche ein erfindungsgemässes Förderorgan 101 umfasst. Das Förderorgan 101 umfasst eine Mehrzahl von Baugruppen mit jeweils einem flächigen Förderelement 102 und daran angebrachten Rollenmechanismen 103 mit Rollen 105. Ferner umfasst das Förderorgan 101 eine Antriebskette 112, an welcher die genannten Baugruppen über die Förderelemente 102 befestigt sind. Die Förderelemente 102 sind hierzu starr an je einem einzelnen Glied der Antriebskette 112 befestig. Die Antriebskette 112 ist durch einen Kettenkanal 113 geführt, welcher die Antriebskette 112 teilweise umgibt und c-förmig umschliesst. Der Kettenkanal 113 bildet so eine Kettenführung aus.

In **Figur 15** ist eine Ansicht von vorne auf einen Ausschnitt der Förderanlage 1, 1' aus Figur 14 dargestellt. In Figur 15 sind die Rollen 105 in Antriebstellung dargestellt, wobei eine Abrollführung 117 unter den Rollen 105 positioniert ist, entlang welcher die Rollen 105 abrollen.

## Patentansprüche

1. Förderanlage (1) mit einem antreibbaren Förderorgan (101), welches eine dem Fördergut (20) zugewandte, eine Förderstrecke definierende, bahnförmige Hauptfläche (108) ausbildet, und mindestens ein Förderelement (102) enthält, welches mindestens einen Teil der Hauptfläche (108) ausbildet, wobei das Förderorgan (101) über Rollenhalterungen (104) an dem mindestens einen Förderelement (102) um Rollenachsen (106) drehbar gelagerte Rollen (105) enthält, welche wahlweise den Zustand einer Freilauflaufstellung, einer Arretierstellung oder einer Antriebsstellung einnehmen können, und die Förderanlage (1) mindestens einen auf dem Förderorgan (101) verbindungsfrei aufliegenden Förderbehälter (10) umfasst, wobei die Rollen (105) mindestens teilweise über die Hauptfläche (108) des Förderelementes (102) hinausragen, so dass der mindestens eine Förderbehälter (10) den Rollen (105) aufliegt, und die Förderanlage (1) mindestens eine Staustrecke (2) zum Puffern von Förderbehältern (10) ausbildet und die Rollen (105) entlang der Staustrecke (2) in einer Freilaufstellung sind,
**dadurch gekennzeichnet, dass**
die Förderanlage (1) in Förderrichtung (F) im Anschluss an die Staustrecke (2) eine Entlassungseinrichtung (3) zum Entlassen einzelner Förderbehälter (10) aus der Staustrecke (2) aufweist, und
die Förderanlage (1) eine Beschleunigungsstrecke (4) ausbildet, entlang welcher die Rollen (105) über eine Abrollführung (117) angetrieben werden können, wobei die Beschleunigungsstrecke (4) in Förderrichtung (F) nach der Entlassungseinrichtung (3) angeordnet ist, und
die Förderanlage (1) entlang der Förderstrecke einen Abgabebereich (5) mit einer Abgabeeinrichtung zum Abgeben von Fördergütern (20) an einen Wegförderer (61) ausbildet, wobei die Beschleunigungsstrecke (4) in Förderrichtung (F) vor dem Abgabebereich (5) angeordnet ist, derart, dass die Förderbehälter (10) der Förderanlage (1) in eine takt-synchrone Förderung mit Förderbehältern (62) des Wegförderers (61) gebracht werden können, so dass im Abgabebereich (5) Paarungen von nebeneinander angeordneten Förderbehältern (10, 62) zwecks Abgabe der Fördergüter (20) ausgebildet werden können.

2. Förderanlage (1) nach Anspruch 1, **dadurch gekennzeichnet, dass** die Staustrecke (2) in Förderrichtung (F) zwischen einer Beschickungsstrecke (9) und dem Abgabebereich (5) ausgebildet wird.

3. Förderanlage (1) nach einem der Ansprüche 1 bis 2, **dadurch gekennzeichnet, dass** die Abgabeeinrichtung einen Neigemechanismus (6) zum in Förderrichtung (F) betrachtet seitlichen Neigen von Förderbehältern (10) umfasst.

4. Förderanlage (1) nach Anspruch 3, **dadurch gekennzeichnet, dass** die Abgabeeinrichtung eine Weiche (8) umfasst, welche mit einer Steuerungseinrichtung (21) zusammenwirkt, und über welche die Förderbehälter (10) wahlweise dem Neigemechanismus (6) zugeführt oder auf dem Förderorgan (101) weitergefördert werden können.

5. Förderanlage (1) nach einem der Ansprüche 1 bis 4, **dadurch gekennzeichnet, dass** die Förderanlage (1) eine Beschickungsstrecke (9) mit einer Beschickungseinrichtung ausbildet, in welcher die Förderbehälter (10) mit Fördergütern (20) beschickt werden können, wobei sich die Rollen (105) entlang der Beschickungsstrecke (9) insbesondere in einer Arretierstellung befinden und so Mitnehmer für die Förderbehälter (10) ausbilden.

6. Förderanlage (1) nach einem der Ansprüche 1 bis 5, **dadurch gekennzeichnet, dass** die Förderanlage (1) eine Erfassungseinrichtung (13) zum Erfassen von Identifikationsinformationen am Fördergut (20) enthält.

7. Förderanlage (1) nach einem der Ansprüche 1 bis 6, **dadurch gekennzeichnet, dass** die Förderanlage (1) eine Wägeeinrichtung (14) zum Wägen der Fördergüter (20) enthält.

8. Förderanlage (1) nach einem der Ansprüche 1 bis 6, **dadurch gekennzeichnet, dass** die Förderanlage (1) eine Wendelstrecke (15) ausbildet und die Rollen (105) des Förderorgans (101) entlang der Wendelstrecke (15) als Mitnehmer wirken.

9. Förderanlage (1) nach einem der Ansprüche 1 bis 8, **dadurch gekennzeichnet, dass** die Förderanlage (1) ein Sorter ist und eine Mehrzahl von in Förderrichtung (F) entlang der Förderstrecke nacheinander angeordnete Abgabebereiche (5) ausbildet.

10. Fördersystem (31) umfassend eine Förderanlage (1) nach einem der Ansprüche 1 bis 9 und einen Wegförderer (61), wobei die Förderanlage (1) als Zuförderer des Wegförderers (61) ausgelegt ist.

11. Fördersystem (31) umfassend eine Förderanlage (1) nach Anspruch 10, **dadurch gekennzeichnet, dass** die Förderanlage (1) und der Wegförderer (61) einen Transferbereich (5) zum Transferieren von Fördergütern (20) von der Förderanlage (1) an den Wegförderer (61) ausbilden.

12. Fördersystem (31) nach Anspruch 10 oder 11, **dadurch gekennzeichnet, dass** der Wegförderer (61) eine weitere Förderanlage, insbesondere ein Sorter ist.

13. Verfahren zur Abgabe von Fördergütern (20) von einer Förderanlage (1) gemäss einem der Ansprüche 1 bis 9 an einen Wegförderer (61), **dadurch gekennzeichnet, dass** die dem Förderorgan (101) aufliegenden Förderbehälter (10) entlang einer Staustrecke (2) gepuffert werden, einzeln in eine Beschleunigungsstrecke (4) entlassen und in Abweichung von der Fördergeschwindigkeit des Förderorgans (101) beschleunigt werden, wobei die Förderbehälter (10) der Förderanlage (1) in eine takt-synchrone Förderung mit Förderbehältern (62) des Wegförderers (61) gebracht werden, so dass im Abgabebereich (5) Paarungen von nebeneinander angeordneten Förderbehältern (10, 62) zwecks Abgabe der Fördergüter (20) ausgebildet werden.

## Claims

1. A conveying facility (1) with a drivable conveying member (101) which forms a sheet-like main surface (108) which faces the conveyed item (20) and which defines a conveying stretch, and which comprises at least one conveying element (102) which forms at least a part of the main surface (108), wherein the conveying member (101) comprises rollers (105) which via roller holders (104) are rotatably mounted on the at least one conveying element (102) about roller pivots (106) and which can selectively assume the state of a freewheel position, an arrested position or a drive position, and the conveying facility (1) comprises at least one conveying container (10) which lies on the conveying member (101) in a connection-free manner, wherein the rollers (105) project at least partly beyond the main surface (108) of the conveying element (102), so that the at least one conveying container (10) lies on the rollers (105), and
the conveying facility (1) forms at least one accumulation stretch (2) for buffering conveying containers (10) and the rollers (105) are in a freewheel position along the accumulation stretch (2),
**characterised in that**
subsequently to the accumulation stretch (2) in the conveying direction (F), the conveying facility (1) comprises a release device (3) for releasing individual conveying containers (10) out of the accumulation stretch (2), and
the conveying facility (1) forms an acceleration stretch (4), along which the rollers (105) can be driven via a roll guide (117), wherein the acceleration stretch (4) is arranged subsequent to the release device (3) considered in the conveying direction (F), and
the conveying facility (1) along the conveying stretch forms a delivery region (5) with a delivery device for delivering conveyed items (20) to an outgoing conveyer (61), wherein the acceleration stretch (4) is arranged upstream of the delivery region (5) considered in the conveying direction (F), such that the conveying containers (10) of the conveying facility (1) can be brought into a cyclically synchronous conveying with conveying containers (62) of the outgoing conveyor (61), so that pairings of conveying containers (10, 62) which are arranged next to one another can be formed in the delivery region (5) for the purpose of delivery of the conveyed items (20).

2. A conveying facility (1) according to claim 1, **characterised in that** the accumulation stretch (2) is formed between a feed stretch (9) and the delivery region (5) considered in the conveying direction (F).

3. A conveying facility (1) according to one of the claims 1 to 2, **characterised in that** the delivery device comprises an inclining mechanism (6) for inclining conveying containers (10), said inclining being lateral considered in the conveying direction (F).

4. A conveying facility (1) according to claim 3, **characterised in that** the delivery device comprises a diverter (8) which interacts with a control device (21) and via which the conveying containers (10) can be selectively fed to the inclining mechanism (6) or conveyed further on the conveying member (101).

5. A conveying facility (1) according to one of the claims 1 to 4, **characterised in that** the conveying facility (1) forms a feed stretch (9) with a feed device, in which the conveying containers (10) can be fed with conveyed items (20), wherein the rollers (105) in particular are located in an arrested position along the feed stretch (9) and thus form catches for the conveying containers (10).

6. A conveying facility (1) according to one of the claims 1 to 5, **characterised in that** the conveying facility (1) comprises a detecting device (13) for detecting identification information on the conveyed item (20).

7. A conveying facility (1) according to one of the claims 1 to 6, **characterised in that** the conveying facility (1) comprises a weighing device (14) for weighing the conveyed items (20).

8. A conveying facility (1) according to one of the claims 1 to 6, **characterised in that** the conveying facility (1) forms a spiral stretch (15) and the rollers (105) of the conveying member (10) acts as catches along the spiral stretch (15).

9. A conveying facility (1) according to one of the claims 1 to 8, **characterised in that** the conveying facility (1) is a sorter and forms a plurality of delivery regions (5) which are arranged successively along the conveying stretch in the conveying direction (F).

10. A conveying system (31) comprising a conveying facility (1) according to one of the claims 1 to 9 and a outgoing conveyer (61), wherein the conveying facility (1) is designed as a feed conveyor of the outgoing conveyer (61).

11. A conveying system (31) comprising a conveying facility (1) according to claim 10, **characterised in that** the conveying facility (1) and the outgoing conveyer (61) form a transfer region (5) for transferring conveyed items (20) from the conveying facility (1) onto the outgoing conveyer (61).

12. A conveying system (31) according to claim 10 or 11, **characterised in that** the outgoing conveyer (61) is a further conveying facility, in particular a sorter.

13. A method for the delivery of conveyed items (20) from a conveying facility (1) according to one of the claims 1 to 9 onto an outgoing conveyer (61), **characterised in that** the conveying containers (10) which lie on the conveying member (101) are buffered along an accumulation stretch (2), released individually into an acceleration stretch (4) and accelerated in a manner differing from the conveying speed of the conveying member (101), wherein the conveying containers (10) of the conveying facility (1) are brought into a cyclically synchronous conveying with conveying containers (62) of the outgoing conveyor (61), so that pairings of conveying containers (10, 62) which are arranged next to one another are formed in the delivery region (5) for the purpose of delivery of the conveyed items (20).

## Revendications

1. Installation de convoyage (1) avec un organe de convoyage (101) pouvant être entraîné, qui forme une surface principale (108) en forme de bande, tournée vers le produit à transporter (20) et définissant un trajet de convoyage, et qui contient au moins un élément de convoyage (102), qui forme au moins une partie de la surface principale (108), l'organe de convoyage (101) contient des rouleaux (105) montés à rotation autour d'axes de rouleaux (106) par l'intermédiaire de supports de rouleaux (104) sur le au moins un élément de convoyage (102), lesquels peuvent prendre au choix l'état d'une position de roue libre, d'une position d'arrêt ou d'une position d'entraînement, et l'installation de convoyage (1) comprend au moins un récipient de convoyage (10) reposant sans liaison sur l'organe de convoyage (101), les rouleaux (105) dépassant au moins partiellement de la surface principale (108) de l'élément de convoyage (102), de sorte que le au moins un récipient de convoyage (10) repose sur les rouleaux (105), et l'installation de convoyage (1) formant au moins une section d'accumulation (2) pour l'accumulation de récipients de convoyage (10) et les rouleaux (105) étant dans une position de roue libre le long de la section d'accumulation (2),
**caractérisé en ce que**
l'installation de convoyage (1) présente, dans la direction de convoyage (F), à la suite de la section d'accumulation (2), un dispositif de décharge (3) pour décharger des récipients de convoyage individuels (10) de la section d'accumulation (2), et
l'installation de convoyage (1) forme une section d'accélération (4) le long de laquelle les rouleaux (105) peuvent être entraînés par l'intermédiaire d'un guide de déroulement (117), la section d'accélération (4) étant disposée dans le sens de convoyage (F) après le dispositif de déchargement (3), et
l'installation de convoyage (1) forme le long du trajet de convoyage une zone de distribution (5) avec un dispositif de distribution pour la distribution de produits à transporter (20) à un transporteur d'évacuation (61), le trajet d'accélération (4) étant disposé dans le sens de convoyage (F) avant la zone de distribution (5), de telle sorte que, que les récipients de convoyage (10) de l'installation de convoyage (1) peuvent être amenés en convoyage synchronisé avec des récipients de convoyage (62) du transporteur d'évacuation (61), de sorte que des paires de récipients de convoyage (10, 62) disposés les uns à côté des autres peuvent être formées dans la zone de distribution (5) en vue de la distribution des produits à transporter (20).

2. Installation de convoyage (1) selon la revendication 1, **caractérisée en ce que** la section d'accumulation (2) est formée dans la direction de convoyage (F) entre une section de chargement (9) et la zone de distribution (5).

3. Installation de convoyage (1) selon l'une des revendications 1 à 2, **caractérisée en ce que** le dispositif de distribution comprend un mécanisme d'inclinaison (6) pour incliner latéralement des récipients de convoyage (10), vu dans la direction de convoyage (F).

4. Installation de convoyage (1) selon la revendication 3, **caractérisée en ce que** le dispositif de distribution comprend un aiguillage (8) qui coopère avec un dispositif de commande (21) et par l'intermédiaire duquel les récipients de convoyage (10) peuvent, au choix, être amenés au mécanisme d'inclinaison (6) ou continuer à être convoyés sur l'organe de convoyage (101).

5. Installation de convoyage (1) selon l'une des revendications 1 à 4, **caractérisée en ce que** l'installation de convoyage (1) forme une section de chargement (9) avec un dispositif de chargement, dans lequel les récipients de convoyage (10) peuvent être chargés avec des produits à convoyer (20), les rouleaux (105) se trouvant le long de la section de chargement (9) en particulier dans une position d'arrêt et formant ainsi des entraîneurs pour les récipients de convoyage (10).

6. Installation de convoyage (1) selon l'une des revendications 1 à 5, **caractérisée en ce que** l'installation de convoyage (1) comprend un dispositif de détection (13) pour détecter des informations d'identification sur le produit à transporter (20).

7. Installation de convoyage (1) selon l'une des revendications 1 à 6, **caractérisée en ce que** l'installation de convoyage (1) comprend un dispositif de pesage (14) pour peser les produits à transporter (20).

8. Installation de convoyage (1) selon l'une des revendications 1 à 6, **caractérisée en ce que** l'installation de convoyage (1) forme un trajet hélicoïdal (15) et les rouleaux (105) de l'organe de convoyage (101) agissent comme des entraîneurs le long du trajet hélicoïdal (15).

9. Installation de convoyage (1) selon l'une des revendications 1 à 8, **caractérisée en ce que** l'installation de convoyage (1) est une trieuse et forme une pluralité de zones de distribution (5) disposées les unes à la suite des autres dans la direction de convoyage (F) le long du trajet de convoyage.

10. Système de convoyage (31) comprenant une installation de convoyage (1) selon l'une des revendications 1 à 9 et un convoyeur d'évacuation (61), l'installation de convoyage (1) étant conçue comme un convoyeur d'alimentation du convoyeur d'évacuation (61).

11. Système de convoyage (31) comprenant une installation de convoyage (1) selon la revendication 10, **caractérisé en ce que** l'installation de convoyage (1) et le convoyeur d'évacuation (61) forment une zone de transfert (5) pour transférer des produits à convoyer (20) de l'installation de convoyage (1) vers le convoyeur d'évacuation (61).

12. Système de convoyage (31) selon la revendication 10 ou 11, **caractérisé en ce que** le convoyeur d'évacuation (61) est une autre installation de convoyage, en particulier une trieuse.

13. Procédé pour délivrer des produits à transporter (20) d'une installation de convoyage (1) selon l'une des revendications 1 à 9 à un convoyeur d'évacuation (61), **caractérisé en ce que** les récipients de convoyage (10) reposant sur l'organe de convoyage (101) sont tamponnés le long d'une section d'accumulation (2), sont libérés individuellement dans une section d'accélération (4) et sont accélérés en fonction de la vitesse de convoyage de l'organe de convoyage (101), les récipients de convoyage (10) de l'installation de convoyage (1) étant amenés en convoyage synchronisé avec des récipients de convoyage (62) du transporteur d'évacuation (61), de sorte que des paires de récipients de convoyage (10, 62) disposés les uns à côté des autres sont formées dans la zone de distribution (5) en vue de la distribution des produits à transporter (20).
